(19) Europäisches Patentamt
European Patent Office
Office européen des brevets

(11) **EP 4 756 499 A1**

(12) **DEMANDE DE BREVET EUROPEEN**

(43) Date de publication:
**10.06.2026 Bulletin 2026/24**

(21) Numéro de dépôt: **25220584.4**

(22) Date de dépôt: **03.12.2025**

(51) Classification Internationale des Brevets (IPC):
**G01T 1/167** $^{(2006.01)}$ **G01T 1/36** $^{(2006.01)}$

(52) Classification Coopérative des Brevets (CPC):
**G01T 1/167; G01T 1/36**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **04.12.2024 FR 2413448**

(71) Demandeur: **Commissariat à l'Energie Atomique et aux Energies Alternatives
75015 Paris (FR)**

(72) Inventeurs:
• **VENARA, Julien**
**30131 Pujaut (FR)**
• **FLERES, Lorenzo**
**84000 Avignon (FR)**

(74) Mandataire: **INNOV-GROUP
209 Avenue Berthelot
69007 Lyon (FR)**

(54) **DISPOSITIF EST PROCÉDÉ DE MESURE D'UN OBJET COMPORTANT UNE ACTIVITÉ**

(57) Procédé de caractérisation d'un objet, l'objet comportant au moins un radionucléide émettant un rayonnement β, le procédé comportant :
- a) disposition d'un détecteur face à l'objet ;
- b) détection du rayonnement émis par l'objet ;
- c) à partir du rayonnement détecté par le détecteur, formation d'un spectre d'entrée, comportant une composante β ;
- d) application d'un algorithme d'identification, associé à un radionucléide, au spectre d'entrée, l'algorithme d'i-

dentification déterminant une présence du radionucléide, auquel l'algorithme d'identification est associé, dans l'objet ;
- e) en fonction de d) identification du radionucléide contenu dans l'objet ;
- f) application d'un algorithme de déconvolution au spectre d'entrée de façon à estimer une contribution de chaque radionucléide, identifié dans e), dans le spectre d'entrée.

**Fig. 1**

Processed by Luminess, 75001 PARIS (FR)

EP 4 756 499 A1

**Description**

**DOMAINE TECHNIQUE**

Le domaine technique de l'invention est la mesure de l'activité β d'un objet par spectrométrie.

**ART ANTERIEUR**

La connaissance de l'état radiologique des procédés et équipements d'une installation nucléaire est essentielle pour établir des scénarios de démantèlement robustes et définir la gestion des déchets, en particulier leurs catégorisations et leurs exutoires. Les mesures nucléaires non destructives *in situ* couplées à des techniques de modélisation, permettent d'établir un inventaire radiologique des équipements sur pieds, de procédés et des structures de génie civil.

La spectrométrie gamma est une des techniques de mesures nucléaires non destructives passives la plus couramment employée pour obtenir des informations qualitatives et quantitatives sur les radionucléides émetteurs gamma présents dans un objet. La spectrométrie gamma permet d'acquérir des spectres gamma, sur lesquels des pics caractéristiques peuvent être identifiés, qui correspondent à une signature permettant d'identifier les radionucléides.

Cependant, certains radionucléides n'émettent pas ou peu de rayonnement gamma. Il s'agit par exemple d'émetteurs dits β purs, leur caractérisation radiologique *in situ* est rendue difficile par le très faible parcours des électrons dans les milieux denses. Un exemple de radionucléide émetteur β pur est $^{90}$Sr. L'identification des émetteurs β purs, et la quantification de leur activité, est habituellement effectuée en laboratoire par le biais d'analyses destructives d'échantillons prélevés sur le terrain. Ces mesures destructives en laboratoire s'accompagnent toutefois de certains inconvénients : questions sur la représentativité des échantillons prélevés, coût et délai d'analyse.

La publication Vetter K, « In-situ quantification of gamma-ray and beta-only emitting radionuclides", arXiv, Apr. 09, 2023, http://arxiv.org/abs/2304.07632, désignée ci-après [Vetter] décrit une mesure spectrométrique au cours de laquelle on met en œuvre un détecteur semi-conducteur compact, de type CdZnTe, pour acquérir un spectre. Le dispositif est disposé suffisamment proche d'un objet à caractériser pour détecter le rayonnement γ généré par $^{137}$Cs, les électrons de conversion interne émis par $^{137}$Cs, ainsi que le rayonnement β⁻ émis par $^{90}$Sr. A partir du spectre, on extrait une composante représentative des interactions s'étant produites dans une zone superficielle du détecteur, qui comporte la plupart des interactions d'origine électronique (électrons de conversion interne, rayonnement β⁻) ainsi qu'une composante représentative des interactions s'étant produites en profondeur dans le détecteur, qui comporte les interactions produites par les photons gamma. Un spectre est acquis en disposant un écran entre le détecteur et l'objet, de façon à déterminer les interactions, dans la zone superficielle, dues aux photons gamma. Les spectres dus aux électrons et aux photons font ensuite l'objet de déconvolutions, mettant en œuvre un algorithme de type maximum de vraisemblance, afin de quantifier l'activité des radionucléides.

L'avantage de la méthode décrite dans la publication Vetter est de pouvoir estimer une activité d'émetteurs β purs, sur un objet, sans prélèvement d'un échantillon, et sans analyse destructive. Cependant, cette méthode nécessite une détermination de la profondeur d'interaction dans le détecteur, ce qui est relativement complexe. La séparation du spectre en une composante représentative des interactions d'origine électronique et des interactions d'origine photoniques peut être fastidieuse à mettre en œuvre, notamment dans une mise en œuvre sur le terrain, en dehors des conditions de laboratoire. Par ailleurs, le dépouillement des spectres est relativement complexe à mettre en œuvre.

Un autre inconvénient est le recours à un détecteur de type CdZnTe : ce type de détecteur est basé sur des cristaux dont le volume est limité à quelques cm$^3$. Enfin, le recours à une double mesure, avec et sans écran, constitue autre une contrainte de mise en œuvre.

EP4394454 décrit un procédé d'estimation de l'enrichissement de l'Uranium par spectrométrie β, sachant que l'Uranium est un élément comportant plusieurs radionucléides, par exemple $^{235}$U ou $^{233}$U.

WO2020239884 décrit un procédé d'analyse de spectres X ou gamma, comportant une étape d'identification de radionucléides et une étape de déconvolution spectrale. L'étape de déconvolution spectrale met en œuvre autant de réseaux de neurones qu'il γ a de radionucléides identifiés.

Les inventeurs ont développé une méthode alternative, ayant le même objectif que la méthode décrite dans la publication [Vetter]. La méthode des inventeurs ne nécessite pas de prise en compte de la profondeur d'interaction dans un détecteur. Elle ne se limite pas à l'utilisation d'un détecteur semi-conducteur, et peut être mise en œuvre, avantageusement, sur des détecteurs scintillateurs.

**EXPOSE DE L'INVENTION**

Un premier objet de l'invention est un procédé de caractérisation d'un objet, l'objet comportant au moins un radionucléide émettant un rayonnement β, le procédé comportant :

- a) disposition d'un détecteur face à l'objet, le détecteur étant configuré pour acquérir un spectre, représentant une distribution de l'énergie libérée, dans le détecteur, par le rayonnement émis par l'objet ;
- b) détection du rayonnement émis par l'objet, par le détecteur, durant une période d'acquisition, et acquisition d'un spectre du rayonnement détecté.
- c) à partir du spectre du rayonnement détecté, formation d'un spectre d'entrée, comportant une composante β, qui correspond à une distribution de l'énergie libérée par le rayonnement β dans le détecteur ;
- d) application d'un algorithme d'identification, associé à un radionucléide, au spectre d'entrée, l'algorithme d'identification étant configuré pour déterminer une présence du radionucléide, auquel l'algorithme d'identification est associé, dans l'objet, l'étape d) étant répétée pour différents radionucléides, en mettant en œuvre des algorithmes d'identification différents ;
- e) en fonction de d) identification de chaque radionucléide contenu dans l'objet ;
- f) application d'un algorithme de déconvolution du spectre d'entrée de façon à estimer une contribution de chaque radionucléide, identifié dans e), dans le spectre d'entrée ;
- g) pour chaque radionucléide identifié dans e), à partir de la contribution du radionucléide, dans le spectre d'entée, estimée dans f), estimation d'une activité et/ou d'une profondeur selon laquelle s'étend le radionucléide dans l'objet.

Les étapes d), f) et g) sont mises en œuvre par une unité de traitement à partir du spectre d'entrée. L'étape e) peut être mise en œuvre par l'unité de traitement.

Selon une possibilité, dans l'étape d), chaque algorithme d'identification est un algorithme d'intelligence artificielle d'identification associé à chaque radionucléide, au moins deux radionucléides différents étant respectivement associés à deux algorithmes d'identification différents.

Chaque algorithme d'identification peut être un réseau de neurones.

Selon une possibilité, l'algorithme de déconvolution est basé sur une base de données de déconvolution comportant au moins un spectre représentatif de chaque radionucléide identifié dans e).

Selon une possibilité :

- la base de données de déconvolution comporte, pour un même radionucléide, différents spectres représentatifs de différentes répartitions du radionucléide dans l'objet ;
- l'étape g) comporte une détermination de la répartition du radionucléide dans l'objet.

Selon une possibilité :

- la base de données de déconvolution comporte, pour un même radionucléide, différents spectres représentatifs de différentes profondeurs du radionucléides dans l'objet, à partir d'une surface de l'objet faisant face au détecteur ;
- l'étape g) comporte une détermination de la profondeur selon laquelle s'étend le radionucléide dans l'objet.

Au moins un radionucléide auquel est associé un algorithme d'identification peut être un émetteur β pur.

Le détecteur peut comporter un matériau de type scintillateur organique pour détecter le rayonnement émis par l'objet.

Le détecteur peut comporter un volume de semi-conducteur ou de scintillateur inorganique d'épaisseur inférieure à 10 mm, disposé face à l'objet, l'épaisseur étant considérée selon une direction normale à l'objet.

Selon une possibilité, l'objet présente une activité naturelle, et l'étape c) comporte:

- estimation d'un spectre d'activité naturelle de l'objet ;
- soustraction du spectre d'activité naturelle de l'objet au spectre acquis durant l'étape b) de façon à former le spectre d'entrée.

Le détecteur peut comporter un écran amovible, configuré pour être interposé entre le détecteur et l'objet, le procédé comportant :

- acquisition d'un spectre de fond, durant laquelle l'écran est interposé entre le détecteur et l'objet ;
- l'étape c) comporte une soustraction du spectre de fond au spectre acquis durant l'étape b) pour former le spectre d'entrée.

Un deuxième objet de l'invention est un dispositif de détection, comportant un détecteur, configuré pour acquérir un spectre d'un rayonnement β émis par un objet, le spectre représentant une distribution de l'énergie libérée, dans le détecteur, au cours d'interactions d'un rayonnement ionisant dans le détecteur, le dispositif comportant une unité de traitement configurée pour mettre en œuvre les étapes d) à f) d'un procédé selon le premier objet de l'invention.

Le détecteur peut comporter un matériau de type scintillateur organique pour détecter le rayonnement émis par l'objet.

Le détecteur peut comporter un volume de semi-conducteur ou de scintillateur inorganique d'épaisseur inférieure à 10 mm.

Le détecteur peut comporter un écran amovible, configuré pour être interposé entre le détecteur et l'objet.

L'invention sera mieux comprise à la lecture de l'exposé des exemples de réalisation présentés, dans la suite de la description, en lien avec les figures listées ci-dessous.

## FIGURES

La figure 1 schématise un dispositif de mesure permettant une mise en œuvre de l'invention.

La figure 2A montre un spectre de $^{137}$Cs mesuré en laboratoire. Sauf s'il en est disposé autrement, pour chaque spectre décrit dans cette demande, l'axe des abscisses correspond à l'énergie (unité Mev) et l'axe des ordonnées correspond aux nombres d'interactions détectées.

La figure 2B montre un spectre $\gamma$ de $^{137}$Cs mesuré en laboratoire.

La figure 2C montre un spectre de $^{90}$Sr mesuré en laboratoire.

La figure 3 montre un spectre $\beta\gamma$ d'un objet comportant $^{137}$Cs et $^{90}$Sr.

La figure 4 schématise une configuration modélisée.

Les figures 5A et 5B montrent des spectres modélisés, ainsi que des contributions de radionucléides artificiels ($^{137}$Cs et $^{90}$Sr) et des contributions de radionucléides naturels dans deux configurations différentes.

La figure 6 schématise les principales étapes d'un procédé selon l'invention.

La figure 7A schématise une autre configuration modélisée.

La figure 7B montre des exemples de spectres d'apprentissage.

La figure 8A montre un spectre modélisé d'un objet comportant $^{90}$Sr.

La figure 8B représente une probabilité de présence de différents radionucléides dans le spectre de la figure 8A. Il s'agit de la sortie d'un algorithme d'identification.

La figure 9A montre un spectre modélisé d'un objet comportant $^{14}$C et $^{36}$Cl.

La figure 9B représente une probabilité de présence de différents radionucléides dans le spectre de la figure 9A.

La figure 10A montre des spectres modélisés pour une même activité de $^{90}$Sr répartie selon différentes profondeurs, selon un gradient d'activité suivant une forme exponentielle.

La figure 10B montre les spectres modélisés de la figure 10A normalisés par leurs intégrales respectives.

La figure 10C montre un ratio entre chaque spectre de la figure 10B et un spectre représentatif d'une activité homogène de $^{90}$Sr, normalisé par son intégrale.

La figure 10D est l'équivalent de la figure 10C pour une activité de $^{137}$Cs répartie selon différentes profondeurs.

La figure 11 est une comparaison d'un spectre modélisé d'une activité de $^{90}$Sr, répartie selon une profondeur de 40 mm, selon un gradient exponentiel, et un spectre d'une activité homogène de $^{90}$Sr.

Les figures 12A à 12D montrent l'ajustement progressif de spectres résultant de l'algorithme de déconvolution par rapport à un spectre mesuré, en fonction des itérations.

La figure 13 schématise un échantillon prélevé transversalement à un canal dans un réacteur nucléaire modéré en graphite.

Les figures 14A à 14D représentent des probabilités de présence de $^{137}$Cs et $^{90}$Sr dans des échantillons de graphite : chaque probabilité a été établie en mettant en œuvre 100 fois différents réseaux de neurones d'identification pour chaque échantillon.

La figure 15 montre un exemple de mise en œuvre de déconvolution spectrale, pour déterminer des contributions de différents radionucléides dans un spectre mesuré. Sur la figure 15, l'axe des abscisses correspond à chaque canal.

La figure 16A montre un spectre mesuré sur un échantillon de graphite.

La figure 16B montre un spectre mesuré en disposant un écran entre le détecteur et l'échantillon de graphite.

La figure 16C montre un spectre obtenu par soustraction des spectres représentés sur les figures 16A et 16B.

## EXPOSE DE MODES DE REALISATION PARTICULIERS

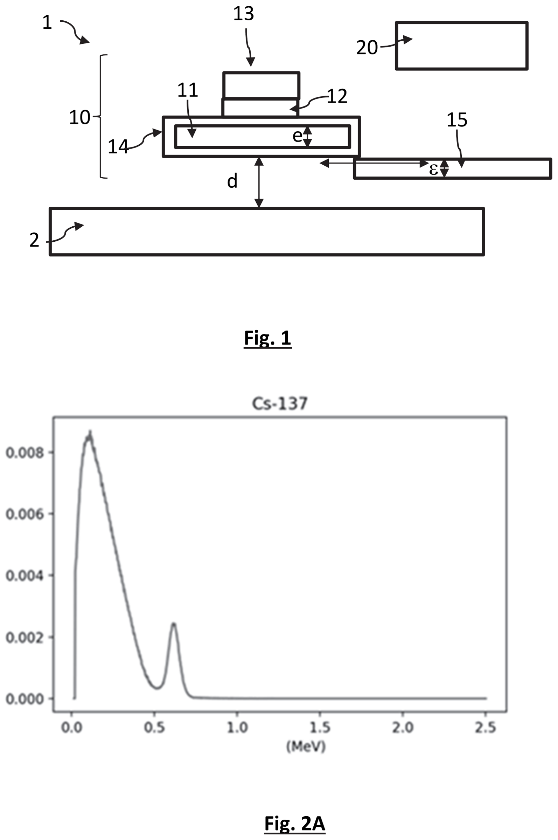

La figure 1 représente un dispositif de mesure permettant une mesure de l'activité d'un objet 2. Le dispositif comporte un détecteur scintillateur 10, comportant un matériau scintillateur 11 de préférence organique, de préférence à base de Polyvinyltoluène (PVT), tel que décrit dans la publication Venara J. et al « Design and development of a portable $\beta$-spectrometer for 90Sr activity measurements in contaminated matrices », Nuclear Instruments and Methods in Physicas Research Section A : Acccelerators, Spectrometers, Detetors and Associated Equipment, vol. 953, p. 163081, Feb. 2020.

Sous l'effet d'interactions entre un rayonnement ionisant et le matériau scintillateur, des impulsions lumineuses sont formées. Ces impulsions lumineuses sont converties en impulsions électriques par un ou plusieurs photodétecteurs 12. Les impulsions électriques sont ensuite traitées par un circuit de spectrométrie 13. Le circuit de spectrométrie 13 est configuré pour former un histogramme en amplitude des impulsions détectées par le scintillateur organique durant une période d'acquisition.

En mettant en œuvre une fonction de calibration en énergie, résultant d'un étalonnage en énergie, il est usuel d'effectuer une correspondance entre l'amplitude des impulsions et des valeurs d'énergie. Lorsqu'une particule ionisante dépose toute son énergie dans le scintillateur, l'amplitude de l'impulsion qu'elle génère correspond à l'énergie de la particule avant l'interaction dans le matériau détecteur. L'étalonnage en énergie du détecteur, c'est-à-dire la correspondance entre la valeur des amplitudes des impulsions et l'énergie, a été effectué en utilisant une source de $^{207}$Bi et/ou de $^{137}$Cs, qui émettent des électrons, à des valeurs d'énergie discrètes, par conversion interne. Lorsque la source utilisée pour l'étalonnage émet un rayonnement gamma, il est possible d'exploiter certaines énergies caractéristiques, par exemple l'énergie correspondant au front Compton ou l'énergie de pics photoélectriques.

Le recours à un détecteur scintillateur organique est approprié pour effectuer une spectrométrie de particules chargées, de type $\beta$. Un scintillateur organique est également sensible à des photons ionisants de type X ou $\gamma$. Cependant, les matériaux formant un scintillateur organique ont un faible numéro atomique, ce qui les rend moins propices à la formation d'interactions photoélectriques, comparativement à des scintillateurs inorganiques ou à des détecteurs semiconducteurs.

Le détecteur scintillateur est recouvert d'une enveloppe optiquement étanche 14, de faible épaisseur, par exemple un film de PET (Polyéthylène Téréphtalate) aluminisé, d'épaisseur 18 $\mu$m pour assurer une étanchéité la lumière ambiante. Une faible épaisseur minimise la probabilité d'interaction d'un rayonnement $\beta^-$. Dans la suite du texte, le terme particule $\beta$ désigne une particule $\beta^-$.

L'épaisseur e du matériau scintillateur est par exemple de 4 mm. Le diamètre du matériau scintillateur de l'exemple est de 76 mm. Un matériau scintillateur organique présente l'avantage d'être peu sensible au rayonnement gamma, du fait d'un faible numéro atomique. De plus, ce type de scintillateur limite le phénomène de rétrodiffusion des particules $\beta$. Un autre avantage est une certaine stabilité de la réponse du matériau scintillateur vis-à-vis de variations thermiques. La réponse, en terme d'intensité lumineuse produite, en étant exposé à un même rayonnement, est stable de 0° à 50°C, ce qui est approprié à des conditions d'utilisation sur le terrain.

Le dispositif de mesure comporte une unité de traitement 20, configurée pour mettre en œuvre des étapes de traitement de spectres décrites par la suite. L'unité de traitement 20 est programmée pour exécuter des instructions codées dans une mémoire, reliée à l'unité de traitement par liaison filaire ou sans fil. L'unité de traitement 20 peut notamment comporter un microprocesseur.

Selon une variante, le détecteur peut comporter un matériau semi-conducteur, adapté à la spectrométrie $\beta$. Il peut par exemple s'agir d'un semi-conducteur de type Silicium, par exemple un silicium planaire.

L'avantage d'un matériau scintillateur organique est la capacité à être fabriqué selon différentes dimensions et différentes formes. Lorsque l'objet est un échantillon prélevé, la forme peut être adaptée à la forme de l'échantillon.

Selon une possibilité, le détecteur 10 comporte un écran amovible 15, faisant office d'obturateur, configuré pour être disposé :

- dans une position fermée, entre le détecteur 10 et l'objet à mesurer 2 ;
- ou dans une position ouverte, libérant l'espace entre le détecteur 10 et l'objet 2, comme représenté sur la figure 1.

La présence de l'écran amovible 15 n'est pas nécessaire.

Dans cet exemple, l'écran 15 est mobile en translation dans un plan parallèle au matériau détecteur 11. L'écran est par exemple formé d'aluminium, l'épaisseur étant par exemple égale à 4 mm.

L'invention est basée sur une détection, par le détecteur 10, de particules $\beta$ et éventuellement $\gamma$ émises par l'objet 2. L'objet 2 est un objet à contrôler, susceptible de présenter une activité massique ou surfacique formée de radionucléides émetteurs $\beta\gamma$, tels $^{137}$Cs, ou émetteurs $\beta$ purs, tels $^{14}$C, $^{90}$Sr ou $^{36}$Cl.

Afin de présenter une sensibilité suffisante à l'égard des particules $\beta$, le détecteur est de préférence placé à une faible distance d de l'objet à caractériser. La distance d est de préférence non nulle, et comprise entre quelques mm et quelques cm, par exemple 1 cm. Cela permet de former un spectre $\beta\gamma$, la faible distance entre le détecteur et l'objet favorisant la contribution des particules $\beta$ dans le spectre.

Selon une possibilité, la contribution du rayonnement $\gamma$ dans le spectre $\beta\gamma$ est limitée en interposant l'écran 15 entre le détecteur 10 et l'objet 2. Cela permet d'acquérir un spectre $\gamma$. On soustrait ensuite le spectre $\gamma$ du spectre $\beta\gamma$, ce qui permet de former un spectre $\beta$, que l'on considère comme représentatif uniquement du rayonnement $\beta$ émis par l'objet.

Ainsi, l'invention est mise en œuvre soit à partir d'un spectre $\beta\gamma$ soit à partir d'un spectre $\beta$. D'une façon générale, l'invention est mise en œuvre à partir d'un spectre dans lequel la contribution du rayonnement $\beta$ est supérieure à 10%, voire à 20 % ou 30% ou davantage. Par contribution, on entend la quantité d'interactions, prises en compte pour former le spectre, dues à un rayonnement β.

Dans les exemples décrits par la suite, l'objet est une paroi de béton. Une difficulté supplémentaire d'un matériau tel que le béton est la présence d'une activité naturelle. Cette dernière, bien que faible, peut compliquer l'interprétation de mesures, en particulier lorsque l'on souhaite adresser des faibles niveaux d'activité artificielle, de l'ordre ou de moins de 1 Bq/g. Parmi les radioéléments naturels potentiellement présents dans l'objet, citons par exemple $^{40}$K, ainsi que des descendants du $^{232}$Th et de $^{233}$U. De tels radioéléments sont par exemple présents dans des objets en béton.

Une autre difficulté, bien connue dans le domaine de la mesure nucléaire, est une présence potentielle d'un bruit de fond γ résultant de la radioactivité artificielle présente dans l'environnement du détecteur, en dehors de l'objet analysé.

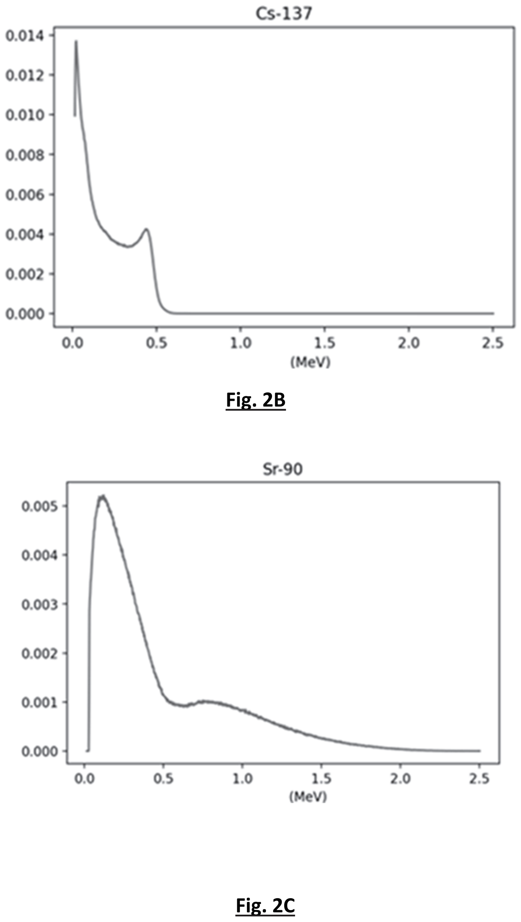

Les figures 2A à 2C sont des spectres mesurés, en laboratoire, en disposant des sources ponctuelles de $^{137}$Cs ou de $^{90}$Sr connues devant le détecteur, la distance d étant de 10 mm. La figure 2A montre un spectre de la source de $^{137}$Cs, formé à partir du rayonnement β et γ émis par $^{137}$Cs en équilibre avec $^{137m}$Ba. La figure 2B montre un spectre du rayonnement γ de $^{137}$Cs. La figure 2B a été obtenue en disposant un écran, tel que précédemment décrit, entre la source de $^{137}$Cs et le détecteur, de façon à absorber le rayonnement β émis par la source. En comparant les figures 2A et 2B, on observe qu'une part significative du spectre provient de la contribution du rayonnement β. Cela est dû à la faible distance entre le détecteur et la source.

La figure 2C montre le spectre de la source de $^{90}$Sr (en équilibre avec $^{90}$Y), le spectre étant entièrement dû à des interactions de particules β dans le détecteur. L'activité de la source étalon était de 9 kBq, et la durée d'acquisition était de 10 minutes.

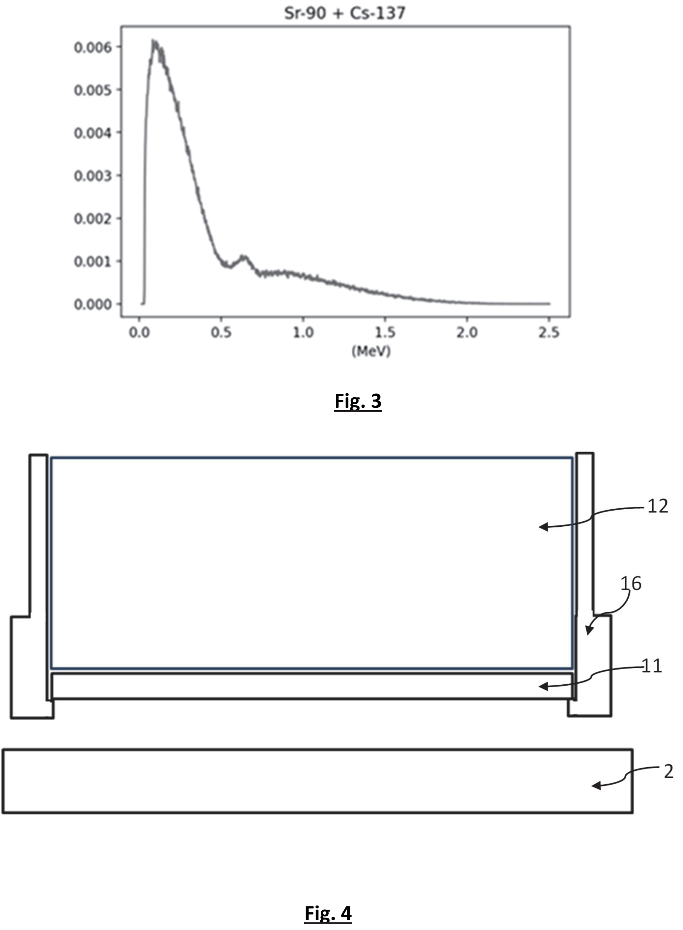

La figure 3 montre un spectre, mesuré en laboratoire, en utilisant les deux sources ponctuelles étalons de $^{137}$Cs et $^{90}$Sr, d'activité de l'ordre de 9 kBq.

Le procédé, décrit par la suite, a pour objectifs, à partir d'un spectre tel que représenté sur la figure 3 :

- d'identifier les radionucléides émetteurs β ou βγ présents dans l'objet analysé ;
- d'estimer une répartition de chaque radionucléide identifié dans l'objet : répartition surfacique ou volumique, et éventuellement épaisseur, à partir de la surface, dans laquelle chaque radionucléide est présent ;
- et/ou quantifier l'activité de chaque radionucléide identifié.

L'invention est particulièrement intéressante si l'on suspecte la présence d'au moins un radionucléide émetteur β pur dans l'objet analysé. Les inventeurs ont constaté que le faible parcours des électrons dans le matériau détecteur, en l'occurrence le scintillateur organique, conduit à ce que les spectres acquis soient très différents selon que l'activité est répartie de façon superficielle ou en profondeur dans l'objet analysé. Le recours à un matériau scintillateur organique, peu dense, peut permettre d'obtenir des spectres différents en fonction de la profondeur selon laquelle l'activité est répartie selon l'objet, en particulier s'agissant des radionucléides émettant des particules β d'énergie élevée. Aussi, bien qu'il soit possible d'utiliser un matériau de type scintillateur inorganique, par exemple NaI, CsI, LaBr$_3$, ou un matériau semi-conducteur (Si, Ge), le recours à un matériau scintillateur organique permet une meilleure discrimination entre des spectres correspondant à une activité répartie selon différentes profondeurs dans l'objet analysé. Le recours à un scintillateur organique permet d'obtenir un ratio plus élevé entre la contribution β sur la contribution γ dans les spectres mesurés. De plus, un scintillateur organique peut être dimensionné de façon que la surface exposée à l'objet à contrôler soit élevée, comparativement à un scintillateur réalisé en matériau inorganique. En outre, on peut obtenir des scintillateurs organiques selon une grande variété de formes, planes ou non, ce qui permet une bonne adaptation à la géométrie de l'objet à contrôler.

Bien que préférable, le recours à un scintillateur organique ne constitue pas une condition essentielle de mise en œuvre de l'invention. On peut par exemple utiliser un détecteur semi-conducteur ou scintillateur inorganique suffisamment fin pour limiter la sensibilité à l'égard du rayonnement γ. On peut par exemple utiliser un détecteur semi-conducteur, basé sur un cristal de Si, ou un scintillateur inorganique.

Influence de l'activité naturelle

Une des applications visées de l'invention est le contrôle de bas niveau de structures de génie civil, en béton, pour vérifier que les niveaux d'activité respectent des objectifs prédéterminés. Il peut par exemple s'agir d'atteindre des niveaux d'activité définis dans des standards dits de libération (clearance levels), qui sont de 1 Bq/g pour $^{137}$Cs ou $^{90}$Sr. A de tels niveaux, l'activité naturelle de certains matériaux, tels le béton, peut compliquer l'interprétation des spectres, comme précédemment évoqué.

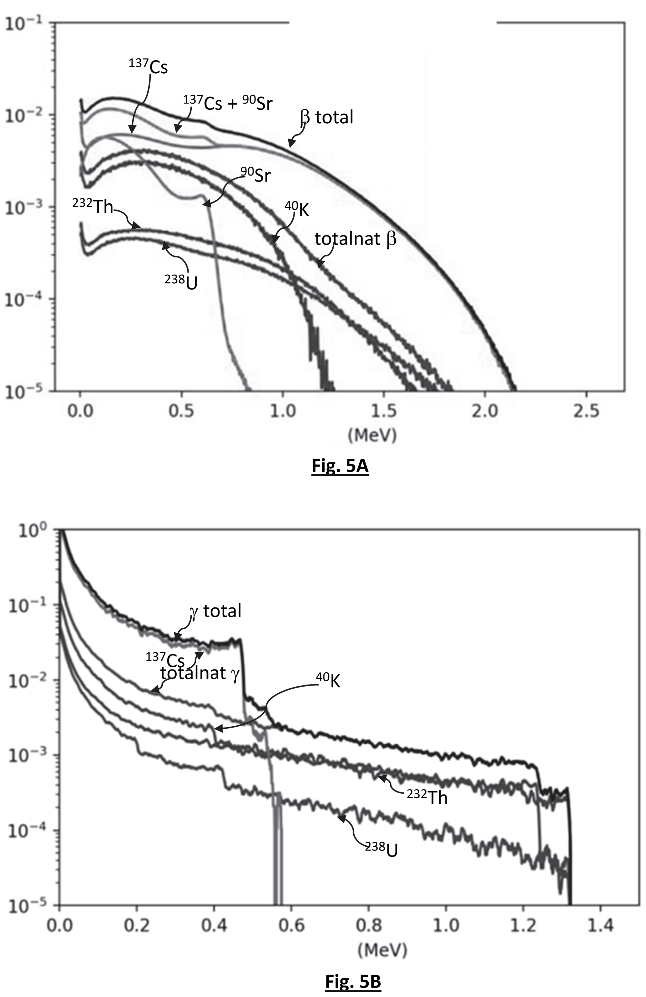

Les inventeurs ont modélisé l'impact de la radioactivité naturelle sur les spectres mesurés par un dispositif tel que décrit en lien avec la figure 1. La figure 4 représente une géométrie modélisée, le détecteur étant confiné dans une enveloppe métallique 16. Sur la figure 4, on a modélisé une activité de $^{90}$Sr et $^{137}$Cs homogène sur une épaisseur de 1 cm s'étendant à partir de la surface de l'objet, en vis-à-vis du détecteur. La modélisation a été effectuée en mettant en œuvre le code de transport MCNP (Monte Carlo N Particle). La figure 5A montre un spectre β modélisé, en prenant en compte une

activité de $^{90}$Sr et de $^{137}$Cs de 1 Bg/g, ainsi que des activités de $^{40}$K, $^{232}$Th et $^{238}$U de 0.5 Bg/g, 0.03 Bg/g et 0.02 Bg/g respectivement. Le spectre β a été modélisé en ne prenant en compte que les interactions de particules β dans le détecteur. Sur la figure 5A, on a représenté les contributions respectives de chaque radionucléide. La part de l'activité naturelle est de 26% (spectre « totalnat β » sur la figure 5A) du spectre β total. La valeur de 26% correspond à l'intégrale du spectre totalnat sur l'intégrale du spectre total.

La figure 5B montre un spectre γ modélisé, en prenant en compte une activité de $^{137}$Cs de 1 Bg/g, ainsi que des activités de $^{40}$K, $^{232}$Th et $^{238}$U de 0.5 Bg/g, 0.03 Bg/g et 0.02 Bg/g respectivement. Le spectre γ a été modélisé en ne prenant en compte que les interactions de particules γ dans le détecteur. La part de l'activité naturelle est de 18% (spectre « totalnat γ» sur la figure 5B) du spectre γ total.

Le tableau 1 montre, pour différentes activités spécifiques de $^{137}$Cs et $^{90}$Sr avec activité $^{137}$Cs = activité $^{90}$Sr, réparties de façon homogène sur une épaisseur de béton de 1 cm, la part de l'activité naturelle dans le spectre β et dans le spectre γ.

Tableau 1

| Bq/g ($^{137}$Cs = $^{90}$Sr) | Part naturelle β (%) | Part naturelle γ (%) |
|---|---|---|
| 1 | 26 | 17.5 |
| 2 | 14.9 | 8.8 |
| 5 | 6.6 | 3.5 |
| 10 | 3.4 | 1.8 |
| 20 | 1.7 | 0.39 |
| 30 | 1.2 | 0.6 |
| 40 | 0.8 | 0.4 |

Les résultats présentés dans le tableau 1 montre que la part, dans le spectre mesuré, de la radioactivité naturelle. Lorsque cette part est jugée trop importante, pour des faibles niveaux d'activité artificielle par exemple, le spectre acquis peut être corrigé, de façon à supprimer la contribution de l'activité naturelle. Cela peut être réalisé en estimant la contribution, dans le spectre mesuré (spectre βγ ou spectre β) de l'activité naturelle de l'objet. Cette dernière, que l'on suppose homogène dans l'objet, peut résulter :

- soit d'une analyse d'un échantillon prélevé sur l'objet ou sur un autre objet, considéré comme représentatif ;
- soit d'une mesure, par exemple une mesure par spectrométrie gamma de haute résolution, par exemple Germanium, sur l'objet ou sur un autre objet considéré comme représentatif.

La contribution de l'activité naturelle dans le spectre est ensuite soustraite, de façon à disposer d'un spectre βγ ou d'un spectre β dans lequel la contribution de l'activité naturelle est considérée comme négligeable.

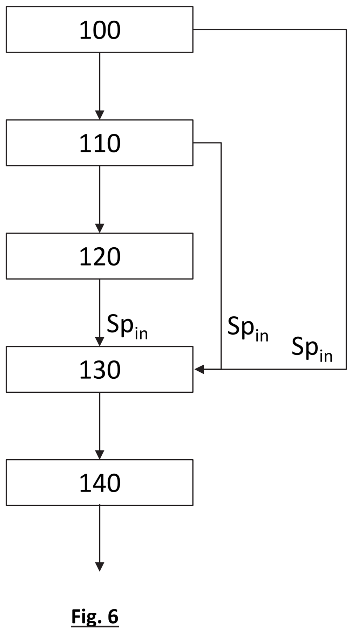

La figure 6 schématise les principales étapes de l'invention.

Etape 100 : disposition du dispositif 10 face à l'objet à contrôler et acquisition d'un spectre du rayonnement émis par l'objet. Il peut s'agir d'un spectre βγ lorsque l'objet comporte des radionucléides émetteurs γ, ou d'un spectre β lorsque l'objet comporte uniquement des radionucléides émetteurs β purs.

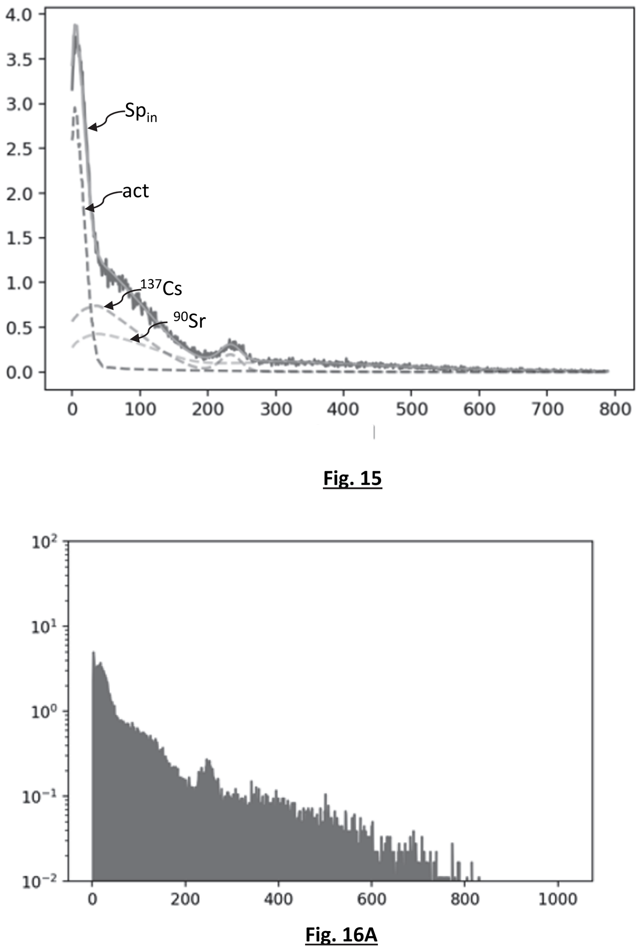

Etape 110 : acquisition d'un spectre γ et correction de la contribution γ dans le spectre acquis. Au cours de l'étape 110, qui est optionnelle, on dispose l'écran 15 entre l'objet et le détecteur. Cela permet d'acquérir un spectre représentatif de la composante γ du spectre βγ acquis au cours de l'étape 110. On forme un spectre β par soustraction, comme décrit par la suite, en lien avec les figures 16A à 16C .

L'étape 110 est optionnelle. Elle est mise en œuvre lorsque la contribution du rayonnement γ dans le spectre acquis est trop importante.

Etape 120 : correction de l'activité naturelle

Au cours de l'étape 120, on estime une contribution de l'activité naturelle dans le spectre β ou $βγ$ résultant de l'étape 110 ou de l'étape 100. Cette dernière est soustraite du spectre acquis dans l'étape 100 ou du spectre résultant de l'étape 110. L'étape 120 est optionnelle. Elle est mise en œuvre lorsque la contribution de l'activité naturelle dans le spectre acquis, ou résultant de l'étape 110, est trop importante.

Suite aux étapes 100 à 120, on dispose d'un spectre d'entrée Sp$_{in}$, qui est soit le spectre acquis lors de l'étape 100, soit le spectre formé suite aux éventuelles corrections décrites en lien avec les étapes 110 à 120. Le spectre d'entrée

Sp$_{in}$ forme une donnée d'entrée aux algorithmes décrits dans les étapes de traitement 130 et 140, mises en œuvre par l'unité de traitement 20.

Etape 130 : Identification de radionucléides

Un aspect important de l'invention est de combiner deux étapes successives d'analyse du spectre d'entrée : une première étape d'identification, de façon à identifier les radionucléides présents dans l'objet, sur la base du spectre d'entrée, sans quantification. L'objectif est d'identifier les radionucléides présents, parmi une liste préétablie. Suite à cette première étape, et sur la base de l'identification effectuée, une deuxième étape est entreprise, visant à estimer les contributions, dans le spectre, des radionucléides identifiés.

L'étape d'identification est mise en œuvre avec des algorithmes d'identification, qui sont des algorithme d'intelligence artificielle à apprentissage supervisé. Chaque algorithme d'identification est destiné à identifier la présence d'un radionucléide *i* dans le spectre d'entrée. Chaque algorithme d'identification peut être un réseau de neurones, par exemple un réseau de neurones convolutif *CNN$_i$*, par exemple un réseau convolutif bayésien, associé à un radionucléide i. L'indice i se réfère au radionucléide auquel le réseau de neurones est associé. De tels réseaux de neurones sont usuels dans le traitement de données structurées, comme des images ou des histogrammes. Une succession de couches convolutives permet d'extraire des caractéristiques du spectre d'entrée. Les couches convolutives débouchent sur des couches, de type perceptron multicouches, permettant de déterminer une probabilité de présence du radionucléide associé au réseau de neurones convolutif CNN$_i$, à partir des caractéristiques extraites par les couches de convolution.

La sortie de chaque algorithme d'identification est une probabilité de présence du radionucléide, auquel l'algorithme d'identification est associé, dans l'objet. On dispose ainsi d'autant d'algorithmes d'identification que de radionucléides présents dans la liste, susceptibles d'être présents dans l'objet. Le spectre d'entrée Sp$_{in}$ forme une donnée d'entrée de chacun de ces algorithmes. Pour chaque radionucléide de la liste, la sortie de chaque algorithme permet de considérer le radionucléide comme identifié ou non identifié, d'après le spectre d'entrée. Chaque algorithme d'identification a préalablement fait l'objet d'un apprentissage, en utilisant des spectres d'apprentissage modélisés ou acquis en présence et en l'absence du radionucléide, auquel il est associé, dans l'objet, ou dans un objet considéré comme comparable.

La sortie de chaque algorithme d'identification *CNN$_i$* est une probabilité $P_i$ que le radionucléide *i* soit présent dans l'objet examiné. On considère qu'au-delà d'un certain seuil, par exemple 0.5, la radionucléide *i* est présent dans l'objet. Inversement, en deçà du seuil, le radionucléide *i* n'est pas présent dans l'objet.

De préférence, le réseau de neurones convolutif met en œuvre un Monte Carlo Dropout, ce qui correspond à une désactivation de certains neurones, selon une loi de probabilité ou aléatoirement, durant la phase d'apprentissage et durant l'utilisation du réseau de neurones. Ainsi, le réseau peut fournir un résultat différent à partir de plusieurs mises en œuvre sur la base d'une même donnée d'entrée. Cela permet d'obtenir une statistique de mesure.

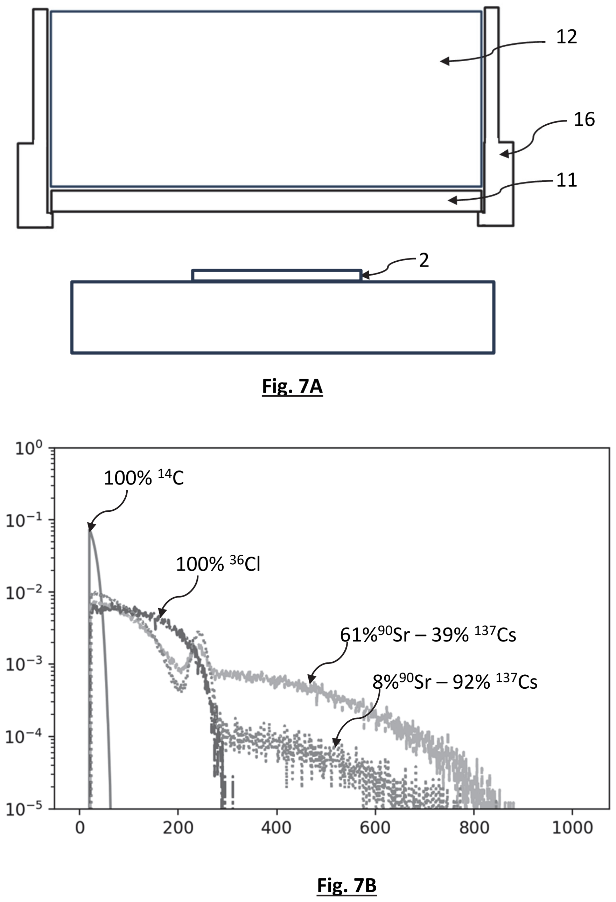

La figure 7A schématise une modélisation du détecteur, sur la base de laquelle on a établi, à l'aide du code MCNP, différents spectres d'apprentissage pour différents radionucléides, en l'occurrence $^{14}$C, $^{36}$Cl, $^{90}$Sr, $^{137}$Cs. Le détecteur a été supposé disposé à 10 mm de la source étalon 2. En partant de quatre spectres initiaux, modélisés en considérant une répartition surfacique pour chaque radionucléide, on a constitué une base de données d'apprentissage en combinant les spectres, pondérés par différents paramètres définis aléatoirement : nombre de radionucléides dans le spectre, proportion de chaque radionucléide, nombre d'interactions prises en compte dans le spectre, énergie minimale, énergie maximale. On a ainsi généré 500 000 spectres d'apprentissage avec un nombre de d'interactions prises en compte (nombre de coups), compris entre 1$^E$3 et 1$^E$7.

La figure 7B schématise des spectres d'apprentissage utilisés pour paramétrer les algorithmes d'identification respectivement associés aux différents radionucléides. Sur la figure 7B, on a représenté, pour chaque spectre, les proportions de chaque radionucléide.

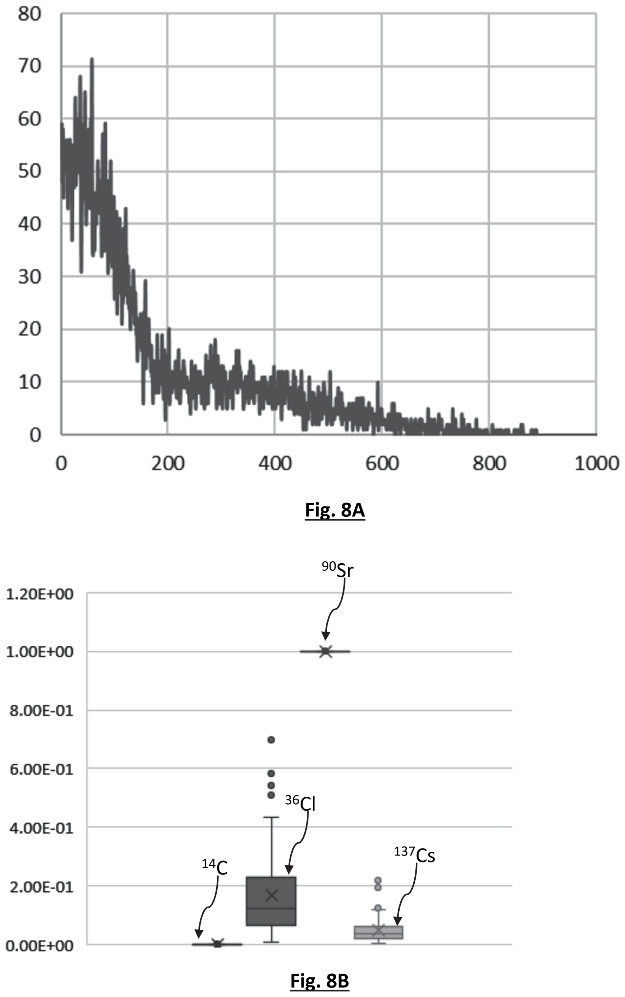

Les figures 8A et 8B montrent un premier exemple d'application de l'algorithme d'identification.

La figure 8A représente un spectre β mesuré d'une source de $^{90}$Sr. Le spectre a été utilisé 100 fois par chaque algorithme d'identification respectivement défini pour chacun des radionucléides $^{14}$C, $^{36}$Cl, $^{90}$Sr, $^{137}$Cs. La figure 8B montre les probabilités de présence définies pour chaque radionucléide, sous la forme de box-plots (boites à moustaches). $^{90}$Sr est systématiquement identifié, tandis que la médiane des probabilités de présence de $^{14}$C, $^{36}$Cl et $^{137}$Cs est toujours inférieure à 0.5.

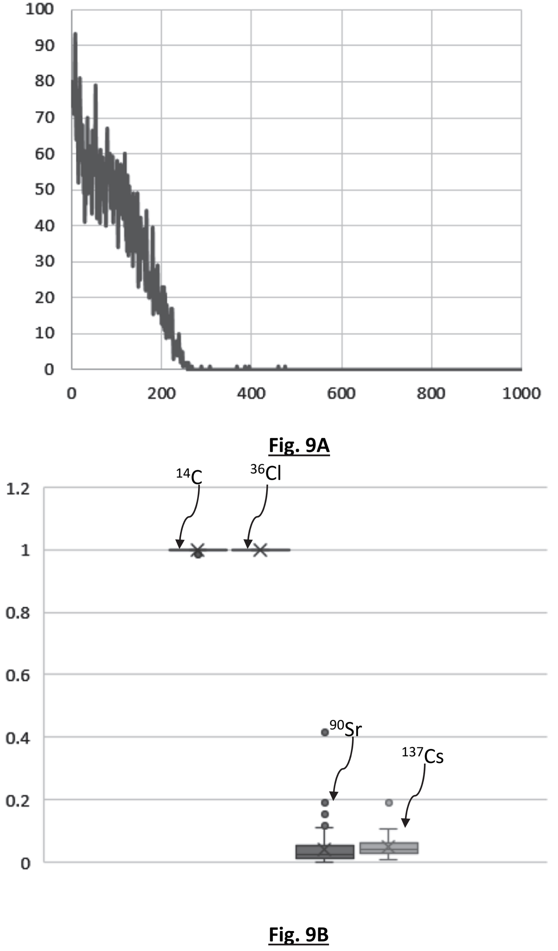

Les figures 9A et 9B montrent un deuxième exemple d'application de l'algorithme d'identification. La figure 9A représente un spectre β d'un mélange comportant 5% de $^{14}$C et 95% de $^{36}$Cl. Le spectre a été utilisé 100 fois à chaque algorithme d'identification défini pour chacun des radionucléides $^{14}$C, $^{36}$Cl, $^{90}$Sr, $^{137}$Cs. La figure 9B montre les probabilités de présence définies pour chaque radionucléide, sous la forme de boxplots. $^{14}$C et $^{36}$Cl sont systématiquement identifiés, tandis que les probabilités de présence de $^{90}$Sr et $^{137}$Cs sont toujours inférieures à 0.5.

La performance de l'algorithme d'identification a été évaluée en utilisant des spectres de test obtenus en combinant quatre spectres mesurés expérimentalement en utilisant respectivement des sources de $^{14}$C, $^{36}$Cl, $^{90}$Sr, et

[137]Cs. On a formé 10000 spectres de test, en combinant les quatre spectres mesurés, et en faisant varier des caractéristiques : proportions relatives, activité, nombre d'interactions prises en compte dans le spectre, énergie minimale et énergie maximale des spectres. Les 10000 spectres de test ont été traités par l'algorithme d'identification.

Les tableaux 2, 3, 4 et 5 sont des matrices de confusion. La première colonne représente la vérité terrain. La première ligne représente le résultat de l'algorithme d'identification. 0 signifie radionucléide absent, 1 signifie radionucléide présent. Les valeurs de la matrice correspondent aux taux de détection assigné au radionucléide. La case correspondant à la ligne 0 et la colonne 1 correspond à un faux positif. La case correspondant à la ligne 1 et à la colonne 0 correspond à un faux négatif. Les cases correspondant à la ligne 1 et à la colonne 1, ainsi que la ligne 0 et la colonne 0, correspondent aux détections correctes : la valeur déterminée par l'algorithme d'identification correspond à la vérité terrain.

Tableau 2 ($^{14}$C)

|   | 0 | 1 |
|---|---|---|
| 0 | 0.48 | 0.0025 |
| 1 | 0.016 | 0.5 |

Tableau 3 ($^{36}$Cl)

|   | 0 | 1 |
|---|---|---|
| 0 | 0.46 | 0.026 |
| 1 | 0.025 | 0.49 |

Tableau 4 ($^{90}$Sr)

|   | 0 | 1 |
|---|---|---|
| 0 | 0.42 | 0.06 |
| 1 | 0.0088 | 0.51 |

Tableau 5 ($^{137}$Cs)

|   | 0 | 1 |
|---|---|---|
| 0 | 0.43 | 0.043 |
| 1 | 0.021 | 0.51 |

Les résultats présentés en lien avec les figures 8B, 9B, ainsi que les matrices de confusion représentées sur les tableaux 2 à 5 attestent de la fiabilité de l'identification réalisée en soumettant un spectre β ou βγ à différents algorithmes, chaque algorithme étant paramétré à un radionucléide, de façon à identifier le radionucléide dans le spectre.

En fonction de la sortie de chaque algorithme d'identification, on détermine la présence ou l'absence de chaque radionucléide, auquel un algorithme d'identification est associé, dans l'objet.

Etape 140 Déconvolution

Au cours de cette étape, le spectre est soumis à un algorithme de déconvolution, de façon à extraire les composantes respectivement liées à chaque radionucléide préalablement identifié.

Un aspect important de cette étape est que la déconvolution n'est pas réalisée en aveugle, mais sur la base d'un a priori résultant de l'étape d'identification.

L'algorithme de déconvolution est basé sur une base de données de déconvolution, comportant moins une réponse du détecteur, qui correspond à un spectre modélisé pour chaque radionucléide identifié en considérant une activité connue et une répartition connue du radionucléide dans l'objet.

Selon une possibilité, la répartition du radionucléide dans l'objet est connue : elle peut être considérée comme homogène, par exemple lorsque l'objet est un échantillon analysé en laboratoire, ayant subi une homogénéisation. Lorsque la mesure est effectuée sur un objet ayant été activé, la répartition du radionucléide peut être déterminée par une modélisation du flux neutronique auquel a été exposé l'objet. Lorsque l'objet est formé d'un matériau non poreux, par exemple un métal, l'activité peut être supposée surfacique.

Lorsque l'objet est formé d'un matériau poreux, par exemple du béton, différentes répartitions de l'activité peuvent être envisagées. L'activité peut par exemple suivre un gradient décroissant à partir de la surface de l'objet. Par exemple, le gradient a une forme d'une fonction exponentielle décroissante avec la profondeur. Ce type de profil est typique d'une migration de contamination. Si z désigne une profondeur dans l'objet, à partir de la surface de ce dernier, on peut considérer que la répartition de l'activité $A(z)$, suivant la profondeur, suit la forme :

$$A(z) = A(0)e^{-\lambda z} \quad (1)$$

$A(0)$ est l'activité au niveau de la surface et $\lambda$ est un facteur de forme de l'exponentielle. $\lambda$, dont l'unité est l'inverse d'une unité de longueur, conditionne la profondeur *zmax* selon laquelle l'activité est répartie dans l'objet. Si la profondeur *zmax* est définie comme étant la profondeur à laquelle l'activité est $\frac{1}{100}$ de l'activité en surface $A(0)$, alors :

$$zmax = \frac{\ln(100)}{\lambda} \quad (2)$$

La définition de $\lambda$ ou de *zmax* permet de définir un volume dans lequel l'activité est supposée concentrée.

De préférence, la base de données comporte, pour chaque radionucléide identifié, différents spectres modélisés, correspondant respectivement à différentes répartitions du radionucléide dans l'objet et aux activités des radionucléides identifiés. On dispose ainsi d'une base de données, qui pour différents radionucléides, comporte des spectres représentatifs de différentes répartitions de l'activité au sein de l'objet. Par exemple, en prenant en compte un gradient exponentiel, comme décrit dans (1) ou (2), la base de données comporte, pour différents nucléides, des spectres modélisés correspondant à différents paramètres $\lambda$ ou *zmax.*

L'algorithme de déconvolution est mis en œuvre avec les spectres représentatifs correspondant aux radionucléides identifiés dans l'étape d'identification 130. On comprend que l'identification préalable des radionucléides permet de sélectionner, dans la base de données de déconvolution, les spectres modélisés correspondant à chaque radionucléide identifié. La déconvolution peut alors être mise en œuvre avec un nombre restreint de spectres modélisés, limité aux seuls radionucléides identifiés. Cela permet d'éviter des erreurs de déconvolution, en particulier des faux positifs, c'est-à-dire considérer qu'un radionucléide est présent alors qu'il ne l'est pas. Le fait de travailler sur un nombre limité de radionucléides permet de prendre en compte différents profils de répartition pour chaque radionucléide identifié, par exemple différentes profondeurs d'activité *zmax,* sur la base d'un gradient suivant une forme exponentielle décroissante telle que décrite dans (1). Ainsi, la déconvolution permet non seulement d'estimer l'activité de chaque radionucléide sélectionné, mais également la profondeur selon laquelle il s'étend dans l'objet. Sachant que la profondeur associée à un radionucléide peut être différente de la profondeur associée à un autre radionucléide.

L'intérêt de combiner l'étape d'identification avec l'étape de déconvolution est de sélectionner, lors de l'étape de déconvolution, uniquement les spectres représentatifs des radionucléides identifiés. Cela permet de prendre en compte, pour chaque radionucléide, différentes répartitions. En l'absence de sélection des radionucléides, la déconvolution, en prenant en compte différentes répartitions, serait plus hasardeuse, du fait d'un trop grand nombre de spectres à prendre en compte.

La base de données de déconvolution peut comporter des spectres modélisés pour différentes profondeurs d'activité, ainsi que des spectres obtenus par interpolation entre les spectres modélisés, par exemple entre deux profondeurs d'activité modélisées.

Afin d'effectuer la déconvolution, les inventeurs ont mis en œuvre une méthode basée sur la définition d'une fonction de vraisemblance et une maximisation de cette dernière. Les répartitions de l'activité de chaque radionucléide estimé correspondent aux répartitions maximisant la fonction de vraisemblance. La maximisation de la fonction de vraisemblance peut être effectuée selon un algorithme de type MLEM, cité dans l'art antérieur. La déconvolution peut être effectuée par une autre méthode, par exemple une régression, en mettant en œuvre un algorithme à apprentissage supervisé, par exemple réseau de neurones. Dans ce cas, la sortie du réseau de neurones correspond à la contribution de chaque radionucléide dans le spectre d'entrée.

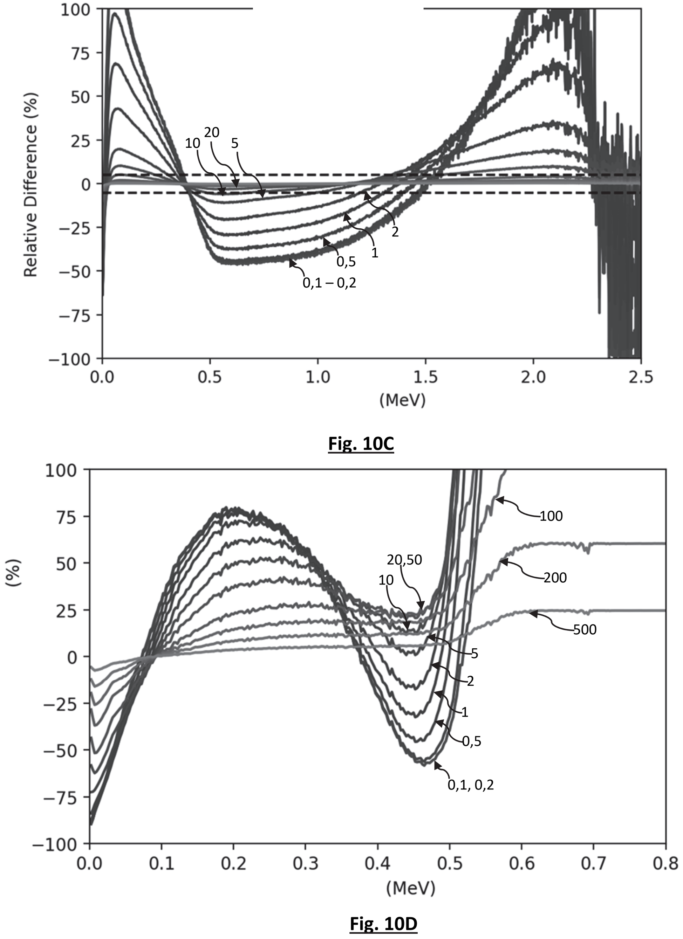

Lorsqu'on met en œuvre une méthode de type MLEM, la déconvolution du spectre est effectuée en plusieurs itérations, en ajustant, au fur et à mesure des itérations, les spectres de la base de données de déconvolution correspondant aux différents radionucléides identifiés, et dont la combinaison se rapproche le plus possible du spectre d'entrée. Les itérations se poursuivent jusqu'à l'atteinte d'un critère de convergence, qui peut être une minimisation d'une fonction de coût traduisant l'écart entre le spectre d'entrée et le spectre obtenu en combinant les spectres de la base de données de déconvolution pour les radionucléides identifiés. La fonction de coût peut être calculée sur l'ensemble des énergies du spectre ou sur des régions d'intérêt prédéterminées. Les régions d'intérêt sont par exemple déterminées a priori, en fonction de la variabilité de la réponse du détecteur en fonction de la profondeur, et cela pour chaque radionucléide : cf. figures 10C et 10D décrites par la suite.

Les inventeurs ont modélisé différents spectres correspondant à différentes profondeurs d'activité *zmax,* comprises entre 0.1 et 500 mm, avec un gradient exponentiel tel que défini par (1) et (2), l'activité étant de 1Bg/g et uniquement formée de $^{90}$Sr. L'objet modélisé était une paroi en béton.

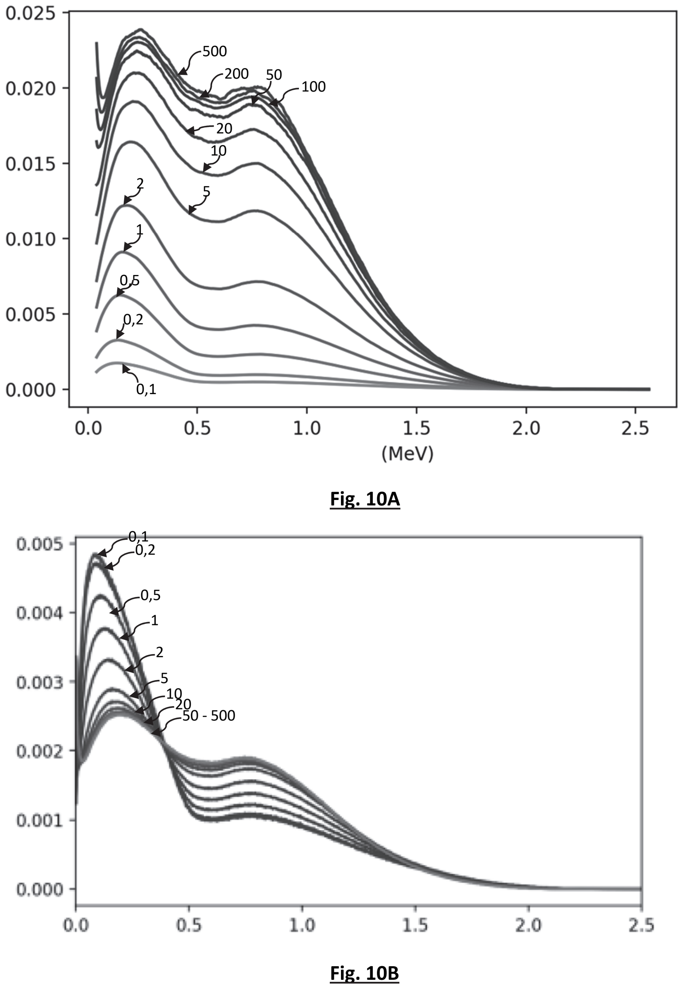

La figure 10A montre les différents spectres modélisés. La figure 10B montre les spectres modélisés normalisés par l'intégrale de chaque spectre. On a également modélisé un spectre montrant une répartition de l'activité uniforme sur toute l'épaisseur de la paroi, l'épaisseur étant de 500 mm. Le spectre correspondant à l'activité uniforme a été normalisé par son intégrale. La figure 10C représente les spectres normalisés de la figure 10B divisés par le spectre correspondant à l'activité uniforme normalisé par son intégrale.

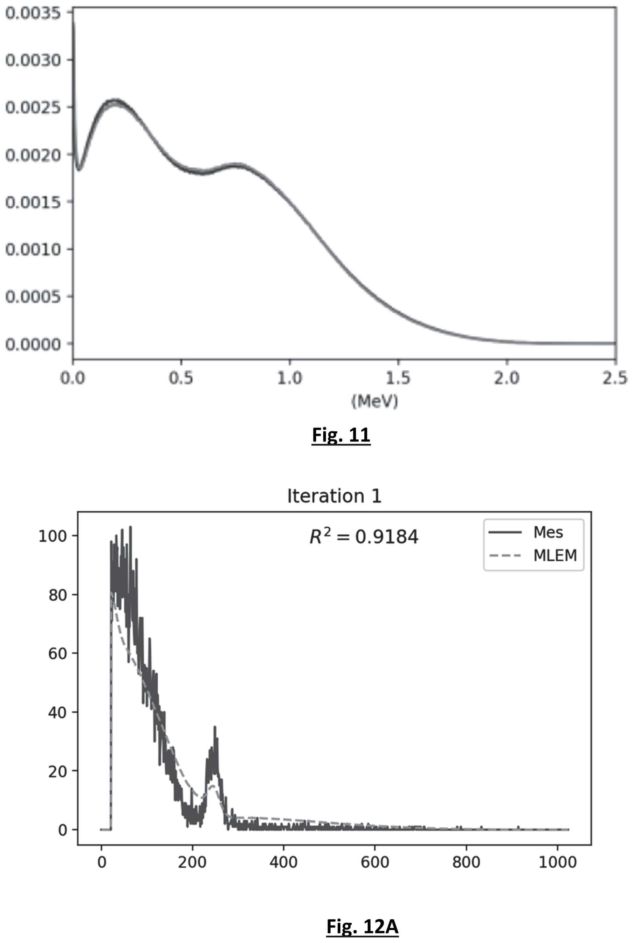

On observe que plus la profondeur d'activité augmente, plus la réponse du détecteur tend vers celle correspondant à un profil uniforme. Sur la figure 10C, deux lignes en tirets ont été tracées, correspondant à un écart de + ou - 5 % par rapport au profil uniforme. Cet écart correspond à l'écart minimum acceptable pour garantir une bonne évaluation de la répartition de l'activité. Jusqu'à *zmax* = 40 mm, les profils représentés sur la figure 10C s'écartent de la bande de +/-5% correspondant à une activité répartie de façon homogène. Ainsi, on considère que pour $^{90}$Sr, la forme d'un spectre β permet une discrimination de la profondeur maximale *zmax* de l'activité dans l'objet, jusqu'à *zmax* = 40 mm, avec l'hypothèse d'un gradient d'activité décroissant prédéterminé. La figure 11 représente une comparaison de spectres modélisés en prenant en compte :

- un gradient d'activité exponentiel décroissant selon une profondeur maximale *zmax* de 40 mm ;
- une activité répartie de façon homogène sur la totalité de la paroi.

Les deux spectres se chevauchent, ce qui confirme la conclusion résultant de la figure 10C.

La figure 10D est une figure équivalente à la figure 10C, en prenant en compte une activité de $^{137}$Cs au lieu de $^{90}$Sr. La figure 10D a été obtenue en modélisant des spectres βγ. Sur la figure 10D, deux lignes en tirets ont été tracées, correspondant à un écart de + ou - 5 % par rapport au profil uniforme. Jusqu'à *zmax* = 500 mm, les profils représentés sur la figure 10D s'écartent de la bande de +/-5% correspondant à une activité de $^{137}$Cs répartie de façon homogène. Ainsi, on considère que pour $^{137}$Cs, la forme d'un spectre βγ permet une discrimination de la profondeur maximale *zmax,* au moins égale à 500 mm, de l'activité dans l'objet, avec l'hypothèse d'un gradient d'activité décroissant prédéterminé.

Les figures 10C et 10D permettent de définir des régions d'intérêt spectrales pour calculer la fonction de coût précédemment évoquée. On peut par exemple prendre en compte des régions dans lesquelles on observe une forte variabilité en fonction de la profondeur.

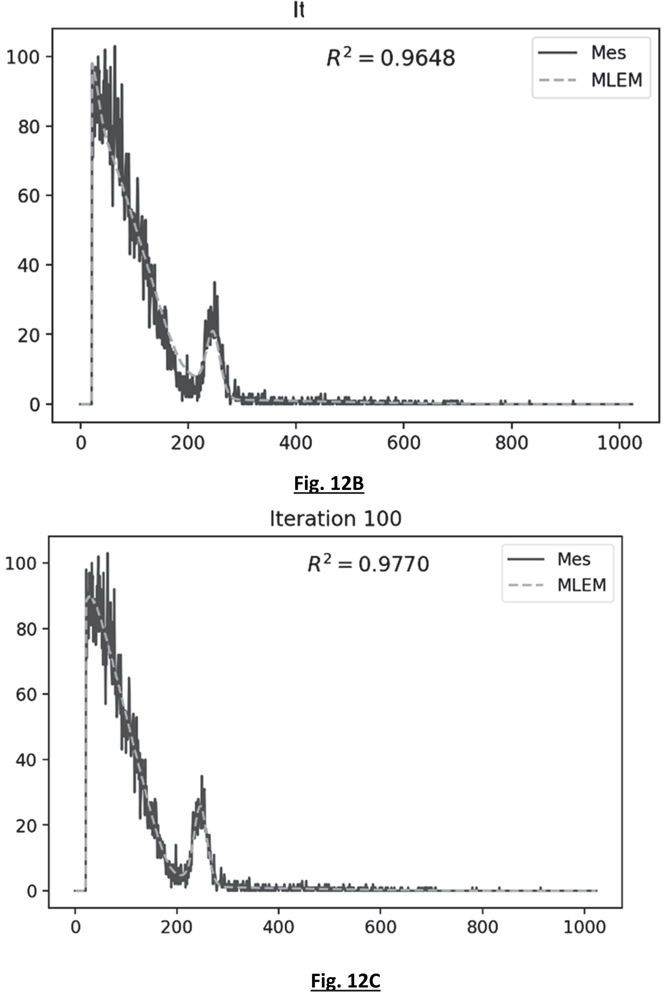

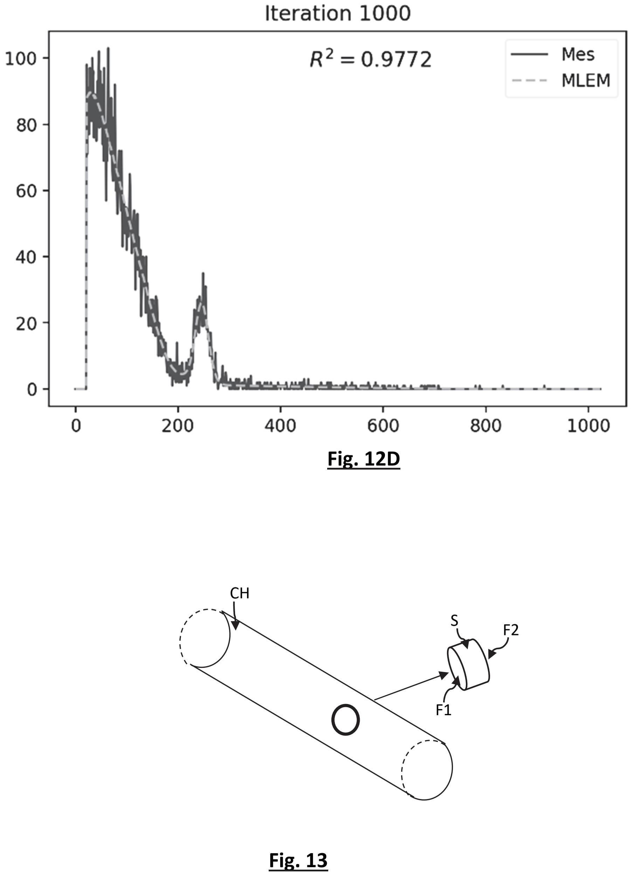

Les figures 12A à 12D montrent l'ajustement, au fur et à mesure des itérations, de spectres résultant de l'algorithme MLEM (traits plein), et d'un spectre résultant d'une mesure (traits en pointillés). Le spectre mesuré correspond à un spectre composé de 92% de $^{137}$Cs et 8% $^{90}$Sr, avec une répartition surfacique, le spectre mesuré comportant 10000 coups, c'est-à-dire 10000 impulsions détectées. Les figures 12A à 12D correspondent respectivement à 1, 10, 100 et 10000 itérations. On observe qu'au fur et à mesure des itérations, le spectre reconstruit par l'algorithme MLEM se rapproche du spectre mesuré.

Le tableau 6 montre, pour chaque itération, les pourcentages respectifs déterminés, sur la base de chaque spectre reconstruit par MLEM, au fur et à mesure des itérations. La deuxième ligne montre les pourcentages réels. On observe que les pourcentages se rapprochent des valeurs réelles au fur et à mesure des itérations.

Tableau 6

|  | C-14 | CI-36 | Sr-90 | Cs-137 |
|---|---|---|---|---|
| Mesure | 0.000 | 0.000 | 0.080 | 0.920 |
| Itération 1 | 0.033 | 0.280 | 0.361 | 0.325 |
| Itération 10 | 0.037 | 0.195 | 0.098 | 0.905 |
| Itération 100 | 0.002 | 0.013 | 0.080 | 0.905 |
| Itération 1000 | 0.000 | 0.000 | 0.080 | 0.919 |

Les inventeurs ont appliqué un algorithme de déconvolution de type MLEM pour différentes profondeurs *zmax* de $^{90}$Sr et $^{137}$Cs, en prenant en compte un gradient exponentiel décroissant, et pour différents ratios d'activité de $^{90}$Sr et $^{137}$Cs. Les configurations sont schématisées sur le tableau 7.

Tableau 7

| Configuration | zmax $^{90}$Sr (mm) | zmax $^{137}$Cs (mm) | $^{90}$Sr / $^{137}$Cs (Bq) |
|---|---|---|---|
| 1 | 1 | 0.5 | 1000 / 3000 |
| 2 | 5 | 10 | 1000/ 333 |
| 3 | 50 | 5 | 1000 / 10000 |
| 4 | 400 | 200 | 10000/ 1000 |

Des spectres β, γ et βγ ont été modélisés pour chacune de ces configurations, en utilisant MCNP, puis on a appliqué une déconvolution MLEM. Les résultats des déconvolution sont reportés dans les tableaux 8 (configuration 1), 9 (configuration 2), 10 (configuration 3) et 11 (configuration 4).

Sur chaque tableau, on a reporté zmax (unité mm), l'écart type relatif à la détermination de zmax (mm), l'activité A($^{137}$Cs) ou A($^{90}$Sr), unité Bq et l'écart type relatif à la détermination de cette activité (unité Bq).

Tableau 8

| Config.1 | $^{90}$Sr | | | | 137Cs | | | |
|---|---|---|---|---|---|---|---|---|
| | zmax | $\sigma$(zmax) | A($^{90}$Sr) | $\sigma$(A$^{90}$Sr) | zmax | $\sigma$(zmax) | A($^{137}$Cs) | $\sigma$($^{137}$Cs) |
| β | 1.1 | 0.39 | 1034.87 | 76.96 | 0.5 | 0.02 | 2989.58 | 71.72 |
| βγ | 1.1 | 0.38 | 1017.54 | 77.22 | 0.5 | 0.02 | 2987.52 | 60.01 |
| γ | | | | | 0.7 | 0.46 | 3010.69 | 5.86 |

Tableau 9

| Config.2 | $^{90}$Sr | | | | $^{137}$Cs | | | |
|---|---|---|---|---|---|---|---|---|
| | zmax | $\sigma$(zmax) | A($^{90}$Sr) | $\sigma$(A$^{90}$Sr) | zmax | $\sigma$(zmax) | A($^{137}$Cs) | $\sigma$($^{137}$Cs) |
| β | 4.82 | 0.00 | 1011.15 | 0.62 | 6.72 | 5.44 | 1691.02 | 1346.24 |
| βγ | 5.71 | 0.74 | 1083.10 | 86.16 | 9.03 | 1.91 | 326.12 | 23.68 |
| γ | | | | | 12.6 | 8.27 | 343.86 | 24.27 |

Tableau 10

| Config.3 | $^{90}$Sr | | | | $^{137}$Cs | | | |
|---|---|---|---|---|---|---|---|---|
| | zmax | $\sigma$(zmax) | A($^{90}$Sr) | $\sigma$(A$^{90}$Sr) | zmax | $\sigma$(zmax) | A($^{137}$Cs) | $\sigma$($^{137}$Cs) |
| β | 18.38 | 4.84 | 1498.93 | 846.04 | 4.82 | 0.00 | 9680.85 | 7.22 |
| βγ | 8.71 | 12.28 | 2954.70 | 1458.95 | 4.82 | 0.00 | 9790.05 | 0.03 |
| γ | | | | | 4.53 | 2.97 | 9976.34 | 252.19 |

Tableau 11

| Config.4 | $^{90}$Sr | | | | $^{137}$Cs | | | |
|---|---|---|---|---|---|---|---|---|
| | zmax | $\sigma$(zmax) | A($^{90}$Sr) | $\sigma$(A$^{90}$Sr) | zmax | $\sigma$(zmax) | A($^{137}$Cs) | $\sigma$($^{137}$Cs) |
| β | 918.85 | 0.00 | 14787.14 | 6.90 | 538.95 | 194.86 | 393.17 | 61.54 |
| βγ | 525.37 | 212.66 | 10673.22 | 1919.11 | 198.52 | 4.09 | 997.47 | 6.62 |
| γ | | | | | 199.25 | 72.04 | 992.20 | 118.84 |

Les résultats présentés dans les tableaux 8 à 11 attestent de la fiabilité de l'algorithme, en particulier en prenant en compte, le spectre βγ pour $^{137}$Cs et le spectre β pour $^{90}$Sr. La configuration 4 (zmax = 400 mm pour $^{90}$Sr) correspond à une profondeur de l'activité en dehors de la profondeur maximale de 40 mm définie pour $^{90}$Sr, comme décrit en lien avec la figure 10C. La prise en compte du spectre β pour quantifier la profondeur d'activité ou l'activité de $^{137}$Cs peut entraîner une

erreur lorsque l'activité en $^{90}$Sr est supérieure, au moins d'un facteur 3, à l'activité de $^{137}$Cs, ce qui est le cas des configurations 2 et 4.

Ainsi, il semble que la prise en compte d'un spectre $\beta\gamma$ soit optimale dans le cas d'un mélange $^{90}$Sr et $^{137}$Cs, sachant que ces deux radionucléides, qui sont des produits de fission, sont fréquemment rencontrés conjointement dans les installations de traitement du combustible irradié, où dans des cas de pollution radioactive en lien avec du combustible irradié.

Les essais réalisés en lien confirment la capacité de l'invention à quantifier l'activité des radionucléides identifiés et à estimer la profondeur de l'activité de chacun de ces radionucléides.

Comparaison sans mise en œuvre de l'algorithme d'identification.

Les spectres représentés sur les figures 8A et 9A ont été utilisés en tant que spectre d'entrée de l'algorithme de déconvolution, sans identification préalable des radionucléides, c'est-à-dire sans mettre en œuvre l'algorithme d'identification. En ce qui concerne le spectre correspondant à une activité de $^{90}$Sr (cf. figure 8A), la mise en œuvre de l'algorithme MLEM trouve un pourcentage d'activité de 0% $^{14}$C, 4% $^{36}$Cl, 90% $^{90}$Sr, 6% $^{137}$Cs. S'agissant du spectre correspondant à une activité de $^{14}$C et $^{36}$Cl (cf. figure 9A), la mise en œuvre de l'algorithme MLEM trouve un pourcentage d'activité de 5% $^{14}$C, 90% $^{36}$Cl, 0% $^{90}$Sr, 5% $^{137}$Cs.

Essai expérimental

Les étapes 110 à 140 ont été mises en œuvre sur des échantillons S de graphite prélevés, par carottage, transversalement à de canaux horizontaux CH destinés au chargement et au déchargement de combustible du cœur d'un réacteur à caloporteur gaz et modéré au graphite. Chaque échantillon s'étendait entre une face F1, dite « face canal », adjacente du canal de combustible, en étant orientée vers l'intérieur du canal combustible, et une face opposée F2, dite « face cœur », orientée vers le modérateur en graphite du réacteur. Sur la figure 13, on a schématisé un canal CH et l'emplacement d'un carottage, duquel est extrait un échantillon S.

Chaque échantillon de graphite était cylindrique : 15 mm de diamètre et 20 mm d'épaisseur. Le détecteur a été disposé à une distance de 25 mm d'une face de chaque échantillon.

On a constitué des spectres d'apprentissage et une base de données de déconvolution, en prenant en compte les principaux radionucléides susceptibles d'être mesurés :

- des produits d'activation : $^{14}$C, $^{36}$Cl, $^{60}$Co, $^{133}$Ba, $^{152}$Eu, $^{154}$Eu ;
- d'éventuels produits de fission : $^{137}$Cs et $^{90}$Sr.

L'objectif de l'analyse était de vérifier la présence de produits de fission, ce qui indique la survenue probable d'une rupture de gaine. Pour évaluer la contamination potentielle par les produits de fission, quatre réseaux de neurones d'identification ont été paramétrés, adressant respectivement des niveaux distincts d'activité minimale des produits de fission $^{137}$Cs et $^{90}$Sr. Les activités minimales étaient respectivement égales à 0.1 Bq.g$^{-1}$, 1 Bq.g$^{-1}$, 10 Bq.g$^{-1}$, 100 Bq.g$^{-1}$. Par la suite, les réseaux de neurones sont respectivement référencés A, B, C et D.

Les 4 réseaux ont été entraînés à partir de 50 000 spectres modélisés, 50% des spectres étant considérés comme présentant des produits de fission, 50% des spectres étant considérés sans produits de fission. S'agissant des spectres comportant des produits de fission, le ratio $^{137}$Cs/$^{90}$Sr a été choisi aléatoirement entre 0.25 et 4. On a choisi aléatoirement une profondeur de répartition telle que *zmax* était compris entre 0.1 mm et 5 mm. La faible profondeur est justifiée par le fait que la contamination par des produits de fission est supposée sèche. On a également modélisé une présence d'un bruit de fond gamma, établi à partir d'une mesure de référence, considérée comme représentative du bruit de fond lors de la réalisation des mesures. Pour chaque spectre d'apprentissage, un temps de mesure a été définie. Une contribution aléatoire du bruit de fond a été ajoutée sur les spectres modélisée, en prenant en compte le temps de mesure, de façon à simuler une fluctuation statistique du bruit de fond. L'activité des produits d'activation ($^{14}$C, $^{36}$Cl, $^{60}$Co, $^{133}$Ba, $^{152}$Eu, $^{154}$Eu ) a été établie en fonction de calculs d'activation du graphite.

80% des spectres ont été utilisés pour l'apprentissage. 10% des spectres ont été utilisés pour la validation, pour ajuster le modèle. 10% des spectres ont été utilisés pour des tests.

On a analysé quelques échantillons prélevés le long de deux canaux de combustible différents. Chaque spectre, mesuré sur un échantillon de graphite, a été analysé cent fois en utilisant les 4 réseaux de neurones. Sur chaque échantillon, on a procédé à une analyse de la face côté cœur et de la face côté canal.

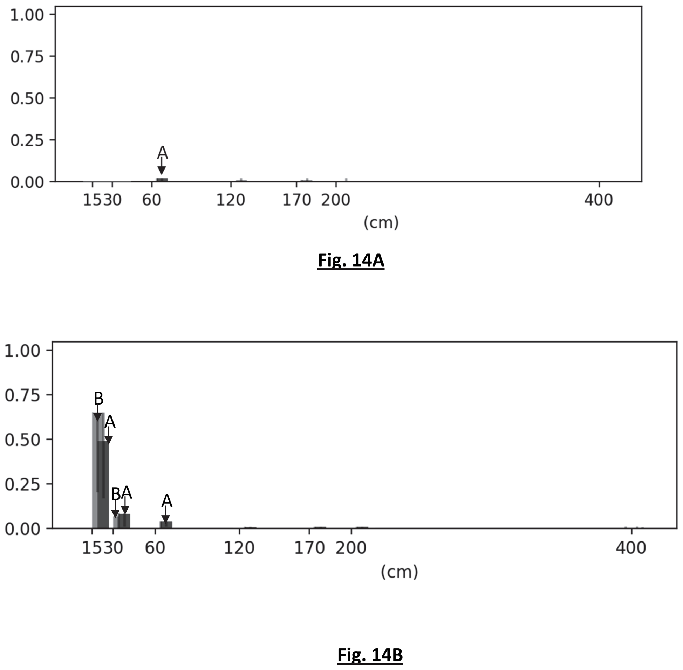

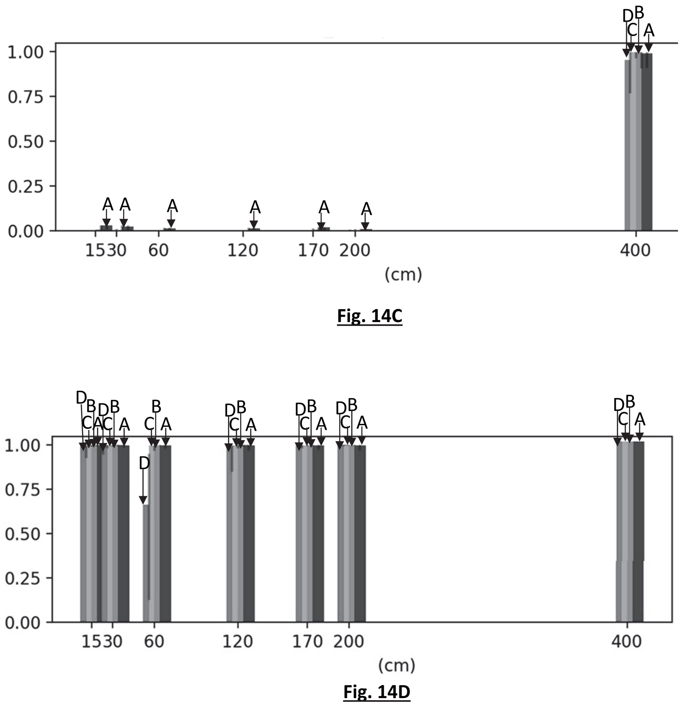

Les figures 14A à 14D représentent les sorties des 4 réseaux de neurones pour différents échantillons, en fonction d'une distance par rapport à une partie médiane du réacteur, respectivement à partir de spectres mesurés soit sur la face cœur (face F2) (figure 14A et 14C) soit sur la face canal (face F1) : figure 14B et 14D. L'axe des ordonnées correspond à la probabilité de présence de contamination, comprise entre 0 et 1 calculée en prenant en compte les 100 analyses pour chaque réseau de neurones. Sur les figures 14A à 14D, on a représenté la probabilité de présence de $^{137}$Cs et $^{90}$Sr résultant des 100 sorties des réseaux de neurones pour lesquels une probabilité significative est obtenue. Les flèches identifient le réseau de neurone pour lequel la probabilité significative est obtenue.

L'axe des abscisses correspond à la position de l'échantillon, unité cm, par rapport à une origine correspondant à la partie médiane du réacteur. Sur les figures 14A et 14B, on a représenté les probabilités obtenues en fonction des sorties des 4 réseaux de neurones d'échantillons, utilisés 100 fois, pour les échantillons prélevés sur un premier canal, dont la référence était 36-17C. Sur les figures 14C et 14D, on a représenté les probabilités obtenues en fonction des sorties des 4 réseaux de neurones pour les échantillons prélevés sur un deuxième canal, dont la référence était 19-13C.

On observe que seul 1 échantillon prélevé sur le canal 36-17C présente une activité $^{137}$Cs+$^{90}$Sr probable, mais faible. Sur ce canal, les réseaux de neurones C et D concluent à l'absence d'activité.

Sur le canal 19-13C, la plupart des analyses des spectres mesurés sur la face canal concluent à la présence d'une activité $^{137}$Cs+$^{90}$Sr.

Sur un échantillon, correspondant à la côte 15 cm du canal 36.17C, face canal. Le spectre a fait l'objet d'une déconvolution, en prenant en compte les sorties des réseaux de neurones d'identification, et sans prendre en compte les réseaux de neurones d'identification. Le tableau 12 montre, les résultats en mettant l'algorithme de déconvolution sans et avec prise en compte de la présence de $^{137}$Cs et $^{90}$Sr.

Le tableau 12 montre les évaluations des activités A de différents radionucléides (unité Bq) ainsi que les incertitudes relatives ($\Sigma$), en mettant l'algorithme de déconvolution sans (I) et avec (II) mise en œuvre préalable des réseaux de neurones d'identification. Sur cet échantillon, les réseaux de neurones A et B, activés 100 fois, ont conclu à la présence de $^{137}$Cs et $^{90}$Sr dans respectivement 50% et 70% des cas (cf. figure 14B). La dernière colonne montre l'écart relatif entre les activités estimées dans (I) et (II). La prise en compte de $^{137}$Cs et $^{90}$Sr permet d'ajuster les valeurs d'activités estimées pour les produits d'activation.

Tableau 12

| | | I | | II | | I/II -1 |
|---|---|---|---|---|---|---|
| | | A (Bq) | $\Sigma$ (%) | A (Bq) | $\Sigma$ (%) | (%) |
| Activation | C-14 | 415029.78 | 16% | 372737.95 | 11% | 11% |
| | Cl-36 | 107.52 | 15% | 96.79 | 11% | 11% |
| | Co-60 | 76.08 | 16% | 68.26 | 12% | 11% |
| | Sr-90 | 144.77 | 26% | 128.48 | 22% | 13% |
| | Ba-133 | 18.54 | 57% | 16.61 | 53% | 12% |
| | Cs-137 | 177.16 | 28% | 158.85 | 24% | 12% |
| | Eu-152 | 93.91 | 628% | 50.71 | 1109% | 85% |
| | Eu-154 | 167.73 | 16% | 150.72 | 15% | 11% |
| Contamination | Sr-90 | - | - | 13.48 | 27% | - |
| | Cs-137 | - | - | 34.81 | 42% | - |

On a mis en oeuvre l'algorithme de déconvolution sur un échantillon du canal 19-13 C, face canal, à la cote 120 cm. Sur cet échantillon, les réseaux de neurones A à D, activés 100 fois, ont conclu à la présence de $^{137}$Cs et $^{90}$Sr dans 100% des cas.(cf. figure 14D).

L'algorithme de déconvolution, a entraîné une minimisation de la fonction de coût pour :

- des activités de $^{90}$Sr et de $^{137}$Cs respectivement égales à 246$\pm$ 46% Bq et 296 $\pm$ 31 Bq.
- des profondeurs d'activité de $^{90}$Sr et de $^{137}$Cs respectivement inférieures à 200 $\mu$m et 500 $\mu$m, ce qui confirme l'hypothèse d'une contamination surfacique.

L'échantillon a fait l'objet d'une caractérisation par spectrométrie gamma haute-résolution, considérée comme une méthode de référence. L'activité de $^{137}$Cs mesurée était de 358 Bq, l'incertitude relative étant de 30%.

Compte tenu des marges d'erreurs la spectrométrie $\beta\gamma$ est en accord avec la méthode de référence.

La figure 15 représente le spectre $\beta\gamma$ mesuré, ainsi que les contributions, dans le spectre d'entrée Sp$_{in}$, de $^{137}$Cs et $^{90}$Sr et des produits d'activation (act), ces contributions résultant de l'algorithme de déconvolution.

Comme précédemment indiqué, en cas d'un rayonnement $\gamma$ intense, il est possible de mettre en œuvre l'invention à partir d'un spectre β. Pour cela, on mesure :

- le spectre βγ de l'objet ;
- le spectre γ , en interposant l'écran entre le détecteur et l'objet.

Le spectre β est obtenu par soustraction du spectre βγ et du spectre γ, en prenant éventuellement en compte une différence quant aux périodes d'acquisition.

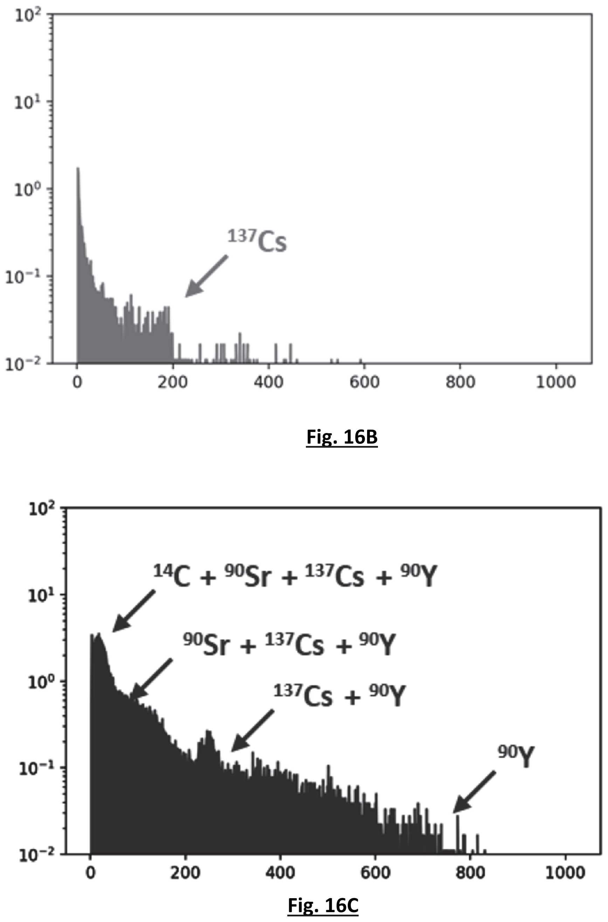

Les figures 16A à 16C illustrent cette possibilité. Sur la figure 16A, on a représenté un spectre βγ mesuré. Sur la figure 16B, on a représenté un spectre γ mesuré. La figure 16C montre le spectre β calculé par différence entre le spectre βγ et le spectre γ.

Bien que décrit en lien avec un spectre acquis de façon non destructive, la méthode peut être généralisée à une analyse de spectres présentant une composante β non négligeable. Il peut s'agir de méthodes de mesure en laboratoire, par exemple des méthodes de type scintillation liquide. Dans ce cas l'objet est un échantillon disposé face au spectromètre β.

## Revendications

1. Procédé de caractérisation d'un objet, l'objet comportant au moins un radionucléide émettant un rayonnement β, le procédé comportant :

   - a) disposition d'un détecteur (10) face à l'objet (2), le détecteur étant configuré pour acquérir un spectre, représentant une distribution de l'énergie libérée, dans le détecteur, par le rayonnement émis par l'objet ;
   - b) détection du rayonnement émis par l'objet, par le détecteur, durant une période d'acquisition, et acquisition d'un spectre du rayonnement détecté ;
   - c) à partir du spectre du rayonnement détecté par le détecteur, formation d'un spectre d'entrée, comportant une composante β, qui correspond à une distribution de l'énergie libérée par le rayonnement β dans le détecteur ;
   - d) application d'un algorithme d'identification, associé à un radionucléide, au spectre d'entrée, l'algorithme d'identification étant configuré pour déterminer une présence du radionucléide, auquel l'algorithme d'identification est associé, dans l'objet, l'étape d) étant répétée pour différents radionucléides, en mettant en œuvre des algorithmes d'identification différents ;
   - e) en fonction de d) identification de chaque radionucléide contenu dans l'objet ;
   - f) application d'un algorithme de déconvolution du spectre d'entrée de façon à estimer une contribution de chaque radionucléide, identifié dans e), dans le spectre d'entrée ;
   - g) pour chaque radionucléide identifié dans e), à partir de la contribution du radionucléide, dans le spectre d'entée, estimée dans f), estimation d'une activité et/ou d'une profondeur selon laquelle s'étend le radionucléide dans l'objet ;

   les étapes d) à g) étant mises en œuvre par une unité de traitement à partir du spectre d'entrée.

2. Procédé selon la revendication 1, dans lequel dans l'étape d), chaque algorithme d'identification est un algorithme d'intelligence artificielle d'identification associé à chaque radionucléide, au moins deux radionucléides différents étant respectivement associés à deux algorithmes d'identification différents.

3. Procédé selon la revendication 2, dans lequel chaque algorithme d'identification est un réseau de neurones.

4. Procédé selon l'une quelconque des revendications précédentes, dans lequel l'algorithme de déconvolution est basé sur une base de données de déconvolution comportant au moins un spectre représentatif de chaque radionucléide identifié dans e).

5. Procédé selon la revendication 4, dans lequel

   - la base de données de déconvolution comporte, pour un même radionucléide, différents spectres représentatifs de différentes répartitions du radionucléide dans l'objet ;
   - l'étape g) comporte une détermination de la répartition du radionucléide dans l'objet.

6. Procédé selon la revendication 5, dans lequel :

- la base de données de déconvolution comporte, pour un même radionucléide, différents spectres représentatifs de différentes profondeurs du radionucléides dans l'objet, à partir d'une surface de l'objet faisant face au détecteur ;
- l'étape g) comporte une détermination de la profondeur selon laquelle s'étend le radionucléide dans l'objet.

7. Procédé selon l'une quelconque des revendications précédentes, dans lequel au moins un radionucléide auquel est associé un algorithme d'identification est un émetteur β pur.

8. Procédé selon l'une quelconque des revendications précédentes, dans lequel le détecteur comporte un matériau de type scintillateur organique pour détecter le rayonnement émis par l'objet.

9. Procédé selon l'une quelconque des revendications 1 à 7, dans lequel le détecteur comporte un volume de semi-conducteur ou de scintillateur inorganique d'épaisseur inférieure à 10 mm, disposé face à l'objet, l'épaisseur étant considérée selon une direction normale à l'objet.

10. Procédé selon l'une quelconque des revendications précédentes, dans lequel l'objet présente une activité naturelle, l'étape c) comportant :

- estimation d'un spectre d'activité naturelle de l'objet ;
- soustraction du spectre d'activité naturelle de l'objet au spectre acquis durant l'étape b) de façon à former le spectre d'entrée.

11. Procédé selon l'une quelconque des revendications précédentes, dans lequel le détecteur comporte un écran amovible (15), configuré pour être interposé entre le détecteur et l'objet, le procédé comporte :

- acquisition d'un spectre de fond, durant laquelle l'écran est interposé entre le détecteur et l'objet ;
- l'étape c) comporte une soustraction du spectre de fond au spectre acquis durant l'étape b) pour former le spectre d'entrée.

12. Dispositif de détection (1), comportant un détecteur (10), configuré pour acquérir un spectre d'un rayonnement β émis par un objet (2), le spectre représentant une distribution de l'énergie libérée, dans le détecteur, au cours d'interactions d'un rayonnement ionisant dans le détecteur, le dispositif comportant une unité de traitement (20) configurée pour mettre en œuvre les étapes d) à f) d'un procédé selon l'une quelconque des revendications précédentes.

13. Dispositif de détection selon la revendication 12, dans lequel le détecteur comporte un matériau de type scintillateur organique pour détecter le rayonnement émis par l'objet.

14. Dispositif selon la revendication 12, dans lequel le détecteur comporte un volume de semi-conducteur ou de scintillateur inorganique d'épaisseur inférieure à 10 mm.

15. Dispositif selon l'une quelconque des revendications 12 à 14, dans lequel le détecteur comporte un écran amovible (15), configuré pour être interposé entre le détecteur et l'objet.

**Fig. 1**

**Fig. 2A**

**Fig. 2B**

**Fig. 2C**

**Fig. 3**

**Fig. 4**

**Fig. 5A**

**Fig. 5B**

**Fig. 6**

**Fig. 7A**

**Fig. 7B**

**Fig. 8A**

**Fig. 8B**

**Fig. 9A**

**Fig. 9B**

**Fig. 10A**

**Fig. 10B**

**Fig. 10C**

**Fig. 10D**

**Fig. 11**

**Fig. 12A**

It

$R^2 = 0.9648$

**Fig. 12B**

Iteration 100

$R^2 = 0.9770$

**Fig. 12C**

Iteration 1000

$R^2 = 0.9772$

Fig. 12D

Fig. 13

**Fig. 14A**

**Fig. 14B**

**Fig. 14C**

**Fig. 14D**

**Fig. 15**

**Fig. 16A**

**Fig. 16B**

**Fig. 16C**

**EP 4 756 499 A1**

Europäisches Patentamt
European Patent Office
Office européen des brevets

# RAPPORT DE RECHERCHE EUROPEENNE

Numéro de la demande

**EP 25 22 0584**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 4 394 454 A1 (COMMISSARIAT ENERGIE ATOMIQUE [FR]) 3 juillet 2024 (2024-07-03) | 1-4,7-15 | INV.<br>G01T1/167 |
| A | * alinéas [0020], [0026], [0028], [0030], [0032], [0033], [0038], [0046], [0047], [0079] - [0090] *<br>* figures 1, 5-8, 14 * | 5,6 | G01T1/36 |
| Y | WO 2020/239884 A1 (COMMISSARIAT ENERGIE ATOMIQUE [FR])<br>3 décembre 2020 (2020-12-03) | 1-4,7-15 | |
| A | * alinéas [0051] - [0054], [0074], [0076], [0163] *<br>* figure 1 * | 5,6 | |
| A | US 2023/259768 A1 (FRONK RYAN G [US] ET AL) 17 août 2023 (2023-08-17)<br>* alinéas [0044], [0048], [0050] *<br>* figure 1 * | 1-15 | |
| A | R.A. Jacobs ET AL: "Adaptive Mixture of Local Experts",<br>Neural computation,<br>1 janvier 1991 (1991-01-01), pages 79-87,<br>XP093293289,<br>Extrait de l'Internet:<br>URL:www.cs.toronto.edu/~fritz/absps/jjnh91.pdf<br>* abrégé * | 1-15 | **DOMAINES TECHNIQUES RECHERCHES (IPC)**<br><br>G01T<br>G06N |

Le présent rapport a été établi pour toutes les revendications

| Lieu de la recherche | Date d'achèvement de la recherche | Examinateur |
|---|---|---|
| La Haye | 23 mars 2026 | Wulveryck, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

34

## ANNEXE AU RAPPORT DE RECHERCHE EUROPEENNE
## RELATIF A LA DEMANDE DE BREVET EUROPEEN NO.

EP 25 22 0584

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-03-2026

| Document brevet cité au rapport de recherche | | Date de publication | Membre(s) de la famille de brevet(s) | | Date de publication |
|---|---|---|---|---|---|
| EP 4394454 | A1 | 03-07-2024 | EP | 4394454 A1 | 03-07-2024 |
| | | | FR | 3144669 A1 | 05-07-2024 |
| WO 2020239884 | A1 | 03-12-2020 | CN | 114008489 A | 01-02-2022 |
| | | | EP | 3977175 A1 | 06-04-2022 |
| | | | FR | 3096782 A1 | 04-12-2020 |
| | | | JP | 7545415 B2 | 04-09-2024 |
| | | | JP | 2022533815 A | 26-07-2022 |
| | | | KR | 20220014329 A | 04-02-2022 |
| | | | US | 2022252744 A1 | 11-08-2022 |
| | | | WO | 2020239884 A1 | 03-12-2020 |
| US 2023259768 | A1 | 17-08-2023 | US | 2023259768 A1 | 17-08-2023 |
| | | | WO | 2022031316 A1 | 10-02-2022 |

EPO FORM P0460

Pour tout renseignement concernant cette annexe : voir Journal Officiel de l'Office européen des brevets, No.12/82

**EP 4 756 499 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 4394454 A

- WO 2020239884 A

### Littérature non-brevet citée dans la description

- **VETTER K**. In-situ quantification of gamma-ray and beta-only emitting radionuclides. *arXiv*, 09 April 2023, http://arxiv.org/abs/2304.07632

- **VENARA J. et al.** Design and development of a portable β-spectrometer for Sr activity measurements in contaminated matrices. *Nuclear Instruments and Methods in Physicas Research Section A : Acccelerators, Spectrometers, Detetors and Associated Equipment*, February 2020, vol. 953, 163081